# EUROPEAN PATENT APPLICATION

(11) **EP 2 351 964 A1**
(43) Date of publication of application: **03.08.2011**
(21) Application number: 09828915.0
(22) Date of filing: 23.07.2009
(51) Int. Cl.: F21V 19/00, F21S 2/00, G02F 1/13357, F21Y 103/00

(54) **ILLUMINATING DEVICE, DISPLAY DEVICE AND TELEVISION RECEIVER**

(30) Priority: 28.11.2008 JP 2008304697
(71) Applicant: Sharp Kabushiki Kaisha, Osaka-shi, Osaka 545-8522 (JP)
(72) Inventor: HISADA, Yasunari, Osaka-shi, Osaka 545-8522 (JP); HARA, Takafumi, Osaka-shi, Osaka 545-8522 (JP); ONO, Kazuyuki, Osaka-shi, Osaka 545-8522 (JP); INAGAKI, Hisanori, Osaka-shi, Osaka 545-8522 (JP)
(74) Representative: Müller-Boré & Partner Patentanwälte
(86) International application number: PCT/JP2009/063166
(87) International publication number: WO 2010/061665

(57) **Abstract**

A backlight unit 12 includes a chassis 14, a cold cathode tube 17, and a lamp clip 18. The chassis has mounting holes 32 and 33. The cold cathode tube 17 is arranged inside the chassis 14. The lamp clip 18 is mounted to the chassis 14 through the mounting holes 32 and 33. The lamp clip 18 holds the cold cathode tube 17. The lamp clip 18 includes main body 27 and mounting parts 30 and 31. The main body 27 is arranged inside the chassis 14. The mounting parts 30 and 31 include base portions 30a and 31a, and holding portions 30b and 31b. The base portions 30a and 31a project from the main body 27 to the outside of the chassis 14 through the mounting holes 32 and 33. The holding portions 30b and 31b project from the base portions 30a and 31a along the main body 27. Edges of the mounting holes are sandwiched between the main body 27 and the holding portions 30b and 31b. The chassis 14 has receiving portions 39 and 40 for receiving the mounting parts 30 and 31. The receiving portions 39 and 40 are formed by drawing parts of the chassis 14 outward. The parts are located close to edges of the mounting holes 32 and 33 on opposite sides to the edges sandwiched between the main body 27 and the holding portions 30b and 31b.

## Description

### TECHNICAL FIELD

The present invention relates to a lighting device, a display device and a television receiver.

### BACKGROUND ART

A liquid crystal panel used in a liquid crystal display device such as a liquid crystal television receiver requires a backlight unit as a separate lighting device because the liquid crystal panel is not a light-emitting component. The backlight unit is arranged behind the liquid crystal panel (i.e., on an opposite side from a display surface). The backlight unit includes a chassis, a reflection sheet, a plurality of cold cathode tubes, multiple layers of optical members (e.g., diffusers), and lamp clips. The chassis is made of metal or resin and has an opening on the liquid crystal panel side. The reflection sheet is placed inside the chassis. The cold cathode tubes are housed in the chassis. The optical members are configured to effectively direct light from the cold cathode tubes toward the liquid crystal panel and arranged so as to cover the opening of the chassis. The lamp clips hold the middle portions of the cold cathode tubes that have elongated tubular shapes.

An example of lamp clips used in the backlight unit having the above configuration is disclosed in Patent Document 1. Each lamp clip includes a main body and a mounting part. The main body is arranged inside the chassis. The mounting part has a base portion and holding portion. The base portion projects from the main body toward the rear. The holding portion in a cantilever form projects from the end of the base portion along the main body. The chassis has mounting holes larger than the mounting part in a plan view. To mount the lamp clip to the chassis, the mounting part is inserted in the mounting hole and then the lamp clip is slid in a direction in which the holding portion projects. As a result, an edge of the mounting hole is sandwiched between the holding portion and the main body and thus the lamp clip is held in an initial condition when it is mounted.
Patent Document 1: Japanese Published Patent Application No. 2007-73527

### Problem to be Solved by the Invention

Each lamp clip has white surfaces to achieve high light reflectivity and effectively use light inside the chassis. However, the lamp clip cannot reflect all rays of light. Some rays of light pass through the lamp clip. The rays that pass the lamp clip leak from the mounting hole to the rear outside of the chassis. As a result, display quality may decrease.

Because the slid-mounting type lamp clip described above includes the mounting part having the cantilever holding portion, the mounting part tends to be large with a large horizontal dimension in plan view. Therefore, an opening area of the chassis corresponding to the mounting hole in which the mounting part is inserted is also large. As a result, a mount of leak light tends to be large and a remedy for that problem is needed.

### DISCLOSURE OF THE PRESENT INVENTION

The present invention was made in view of the foregoing circumstances. An object of the present invention is to reduce leak light.

### Problem to be Solved by the Invention

To solve the above problem, a lighting device of the present invention includes a chassis having a mounting hole, a lamp arranged inside the chassis, and a lamp holder mounted to the chassis through the mounting hole and holding the lamp. The lamp holder includes a main body arranged inside the chassis and at least one mounting part. The mounting part includes a base portion and a holding portion. The base portion projects from the main body and extends out of the chassis through the mounting hole. The holding portion projects from the base portion and extends along the main body such that an edge of the mounting hole is sandwiched between the main body and the holding portion. The chassis includes at least one receiving portion for receiving the mounting part. The receiving portion is formed by drawing a part of the chassis outward. The part is adjacent to an edge of the mounting hole opposite to the edge sandwiched between the main body and the holding portion.

During mounting the lamp holder to the chassis, the mounting part is inserted in the receiving portion, and then the lamp holder is moved in a direction in which the holding portion extends from the base portion. The base portion and the holding portion are projected out of the chassis. The edge of the mounting hole is sandwiched between the holding portion and the main body. As a result, the lamp holder is mounted to the chassis. The receiving portion that receives the mounting part is formed by drawing a part of the chassis outward. In comparison to a cutout continuing into the mounting part and provided as a receiving portion, an opening area in the chassis can be reduced. Therefore, light that leaks to the outside of the chassis can be reduced.

Preferred embodiments of the present invention may have the following configurations.
(1) The lamp holder may further include a contact part provided on the main body and an opposite side to the holding portion with respect to the base portion, and extends inside the receiving portion so as to be in contact with an inner surface of the receiving portion. When the mounting part and the contact part are inserted in the receiving portion, the contact part is in contact with an inner surface of the receiving portion. When the lamp holder is moved in the direction in which the holding portion extends from the above position, the contact part rubs against the inner surface of the receiving portion. Namely, the movement of the lamp holder is guided. When the lamp holder is in a mounting position in which the edge of the mounting hole is sandwiched between the holding portion and the main body, the contact part is in contact with the inner surface of the receiving portion. Therefore, backlash between the mounted lamp holder and chassis can be reduced.

(2) The receiving portion and the contact portion are formed such that side surfaces of the contact part along a projecting direction in which the contact part extends are in contact with the inner surface of the receiving portion. With this configuration, a guide function for moving the lamp holder during mounting and a backlash reduction function for reducing the backlash when the lamp holder is mounted can be enhanced.

(3) The contact part has side surfaces along the projecting direction and the mounting part has side surfaces along a projecting direction in which the mounting part extends. The side surfaces are formed on the same planes. When the contact part and the mounting part are inserted in the receiving portion, the side surfaces of the contact part and the side surfaces of the mounting part are in contact with the inner surface of the receiving portion. The guide function for moving the lamp holder during mounting can be further enhanced.

(4) The receiving portion and the contact part are formed such that a distal-end surface of the contact part is in contact with the inner surface of the receiving portion. With this configuration, the guide function for moving the lamp holder during mounting and the backlash reduction function for reducing the backlash when the lamp holder is mounted can be further enhanced.

(5) The receiving portion is formed such that a gap between the main body and the holding portion is aligned with the edge of the mounting hole with the distal-end surface of the contact part in contact with the receiving portion. When the contact part and the mounting part are inserted in the receiving portion, the distal-end surface of the contact part is in contact with the inner surface of the receiving portion. As a result, the gap between the main body and the holding portion is aligned with the edge of the mounting hole and thus the lamp holder can be smoothly moved.

(6) The distal-end surface of the contact part and a distal-end surface of the mounting part are substantially on the same plane. When the contact part and the mounting part are inserted in the receiving portion, the distal-end surface of the contact part and the distal-end surface of the mounting part are in contact with the inner surface of the receiving portion. The guide function for moving the lamp holder during mounting can be further enhanced.

(7) The receiving portion is formed in a tapered overall shape that narrows toward a projecting end. The receiving portion includes sidewall and a bottom wall. The sidewalls rise from the chassis outward and tilt relative to the chassis. The bottom wall continues from distal ends of the sidewalls. With this configuration, the contact part and the mounting part are easily inserted in the receiving portion that are formed in the tapered shape with the tilted sidewalls. Namely, high workability can be provided.

(8) The chassis has a slit that continues into the mounting hole in an area adjacent to the sidewalls and the mounting hole. Therefore, the tilted sidewalls are easily formed in preferable shapes.

(9) The slit is wider than a dimension defined by bases of the sidewalls. During raising the sidewalls outward at angles, stress is less likely to be applied to the bases of the sidewalls. This reduces defects such as a crack in the chassis.

(10) The lamp clip further includes a second contact part provided on the main body between the base portion and the contact part. The second contact part is in contact with an inner wall of the mounting hole. When the lamp holder is mounted to the chassis, the backlash between the lamp holder and the chassis is restricted with at least two points where the contact part is in contact with the inner surface of the receiving portion and the second contact part is in contact with the inner wall of the mounting hole. Therefore, the mounting condition of the lamp holder is further stabilized.

(11) The second contact part is formed such that a distal-end surface and an outer surface of the chassis are substantially on the same plane. With this configuration, an entire area of the second contact part along the projecting direction is in contact with the inner wall of the mounting hole, and a dimension of projection of the second contact part can be minimized.

(12) The at least one mounting part includes a pair of mounting parts away from each other in the projecting direction in which the holding portion extends. The at least one receiving portion includes a pair of receiving portions at locations corresponding to the mounting parts. The lamp holder is mounted to the chassis with two fixing points away from each other in the projecting direction in which the holding portions extend. Therefore, the mounting condition is further stabilized. Moreover, leak light can be reduced with the receiving portions.

(13) The lamp clip further includes a holding part provided on the main body between the mounting parts. The holding part projects on a side opposite from the side on which the mounting part is located. The contact part is provided for the mounting part that is arranged on a side to which the holding portion extends with respect to the holding part. The lamp holder can be mounted to the chassis using the holding part that projects from the main body in the direction opposite to the direction in which the mounting part projects. The contact part is provided for one of the mounting part on the side to which the holding portion extends with respect to the holding part, that is, the side to which the lamp holder is moved during mounting. The contact part guides the movement of the lamp holder during mounting and thus the lamp holder can be smoothly moved.

(14) The holding portion located on the side to which the holding portion extends with respect to the holding part includes a guide at a distal end. The guide is formed such that a distance to the main body gradually increases as a distance to a tip of the distal end decreases. With this configuration, the edge of the mounting hole can smoothly enter the gap between the holding portion and the main body. The lamp holder can be more smoothly moved during mounting with the guide and the contact part.

(15) The holding portion located on a side opposite to the side to which the holding portion extends with respect to the holding part includes a stopper that projects toward the main body. The chassis has a stopper hole for holding the stopper. The stopper hole is formed in a location away from the mounting hole for the mounting part having the stopper in a direction in which the holding portion extends. This restricts the lamp holder mounted to the chassis from coming off.

(16) The receiving portion for the mounting part having the stopper includes sidewalls that rise outward from the chassis and a bottom wall that continues from the distal ends of the sidewalls and tilts outward. When the mounting part having the stopper is inserted in the receiving portion and the lamp holder is moved from that position, the stopper goes over the edge of the mounting hole. At this time, the holding portion elastically deforms temporarily. Because the bottom wall is tilted, the elastic displacement of the holding portion is allowed. Therefore, the lamp holder is more smoothly moved during mounting.

(17) The lighting device further includes an optical member arranged such that the lamp is located between the chassis and the optical member. The holding part supports the optical member. With this configuration, the optical member is properly supported by the holding part.

(18) The main body and the chassis further include positioning structures that define a relative position of the main body to the chassis with respect to a direction along the main body. With this configuration, the lamp holder is maintained in a condition that it is positioned relative to the chassis along the main body.

(19) The positioning structures include a positioning protrusion provided on the main body and any one of a positioning recess and a positioning hole formed in the chassis and in which the positioning protrusion is fitted. By fitting the positioning protrusion on the main body in the positioning recess or the positioning hole in the chassis, the lamp holder is positioned relative to the chassis.

(20) The positioning structures are in a non-engaging state in a condition that the mounting part is in the receiving portion and in an engaging state in a condition that the mounting part is in the mounting hole. When the mounting part is in the mounting hole and the edge of the mounting hole is sandwiched between the holding portion and the main body, the positioning structures are engaged. With this configuration, the lamp holder mounted to the chassis is stably held.

(21) The mounting part includes a guide at a distal end of the holding portion. The guide is formed such that a distance to the main body gradually increases as a distance to the tip of the distal end decreases. When the mounting part is in the receiving portion and the positioning structures are in the non-engaging state, the main body is separated from the chassis. With the guide provided at the distal end of the holding portion, the lamp holder can be smoothly moved in the projecting direction in which the holding portion extends.

(22) The main body has a wide portion that is wider than the receiving portion in an overlapping area that overlaps the receiving portion in plan view. With the wide portion, the main body is less likely to fall in the receiving portion. Therefore, the mounting condition of the lamp holder is further stabilized. In comparison to a main body, an entire part of which is wide, a material cost of the main body can be reduced.

(23) The holding portion has a cantilever plate-like shape that extends from the base portion along the main body. With this configuration, a sufficient contact area between the edge of the mounting hole and the holding portion can be achieved and thus the mounting condition of the lamp holder is further stabilized.

Next, to solve the problem mentioned earlier, a display device of the present invention includes the above lighting device and a display panel configured to provide display using light from the lighting device.

According to such a display device, the lighting device that illuminates the display panels is less likely to produce leak light. Therefore, high quality display can be provided.

An example of the display panel is a liquid crystal panel. Such a display device can be used as a liquid crystal display device in various applications including television receivers and personal computer displays. Such a display device is especially preferable in large-screen applications.

### Effect of the Invention

According to the present invention, the leak light can be reduced.

### BRIEF DESCRIPTION OF THE DRAWINGS

[FIG. 1] is an exploded perspective view illustrating a general construction of a television receiver according to the first embodiment of the present invention;
[FIG. 2] is an exploded perspective view illustrating a general construction of a liquid crystal display device;
[FIG. 3] is a cross-sectional view of the liquid crystal display device along a short-side direction;
[FIG. 4] is a cross-sectional view of a liquid crystal display device along the long-side direction;
[FIG. 5] is a cross-sectional view illustrating a lamp clip in a mounting position and a chassis;
[FIG. 6] is a plan view illustrating the lamp clip mounted to the chassis;
[FIG. 7] is a cross-sectional view along line vii-vii in FIG. 5; [FIG. 8] is a plan view of the lamp clip;
[FIG. 9] is a bottom view of the lamp clip;
[FIG. 10] is a plan view illustrating mounting holes and receiving portions of the chassis;
[FIG. 11] is a cross-sectional view along line xi-xi in FIG. 10; [FIG. 12] is a cross-sectional view illustrating the lamp clip in a removed position and the chassis;
[FIG. 13] is a cross-sectional view illustrating the lamp clip in a hold position and the chassis;
[FIG. 14] is a cross-sectional view along line xiv-xiv in FIG. 13;
[FIG. 15] is a cross-sectional view along line xv-xv in FIG. 14; [FIG. 16] is a cross-sectional view illustrating a lamp clip in a mounting position and a chassis according to the second embodiment of the present invention;
[FIG. 17] is a cross-sectional view along line xvii-xvii in FIG. 16;
[FIG. 18] is a bottom view of the lamp clip;
[FIG. 19] is a plan view illustrating mounting holes and receiving portions of the chassis;
[FIG. 20] is a cross-sectional view illustrating the lamp clip in a removed position and the chassis;
[FIG. 21] is a cross-sectional view illustrating the lamp clip in a hold position and the chassis;
[FIG. 22] is a cross-sectional view along line xxii-xxii in FIG. 21;
[FIG. 23] is cross-sectional view illustrating a lamp clip in a mounting position and a chassis according to the third embodiment of the present invention;
[FIG. 24] is a cross-sectional view along line xxiv-xxiv in FIG. 23;
[FIG. 25] is a bottom view of the lamp clip;
[FIG. 26] is plan view illustrating mounting holes and receiving portions of the chassis;
[FIG. 27] is cross-sectional view illustrating the lamp clip in a removed position and the chassis; and
[FIG. 28] is a cross-sectional view illustrating the lamp clip in a hold position and the chassis.

### Explanation of Symbols

- 10:: Liquid crystal display device (Display device)
- 11:: Liquid crystal panel (Display panel)
- 12:: Backlight unit (Lighting device)
- 14:: Chassis
- 15a:: Diffuser (Optical member)
- 15b:: Optical sheet (Optical member)
- 17:: Cold cathode tube (Lamp)
- 18:: Lamp clip (Lamp holder)
- 27:: Main body
- 29:: Support pin (Holding part)
- 30:: First mounting part
- 30a:: Base portion
- 30b:: Holding portion
- 30c:: Side surface
- 30d:: Distal-end surface
- 31:: Second mounting part
- 31a:: Base portion
- 31b:: Holding portion
- 32:: First mounting hole
- 33:: Second mounting hole
- 36:: Guide
- 37:: Stopper
- 38:: Stopper hole
- 39:: First receiving portion
- 39a:: Sidewall
- 39b:: Bottom wall
- 40:: Second receiving portion
- 40a:: Sidewall
- 40b:: Bottom wall
- 41:: Slit
- 42:: Wide portion
- 43:: Contact part
- 43a:: Side surface
- 43b:: Distal-end surface
- 45:: Second contact part
- 45b:: Distal-end surface
- 46:: Positioning protrusion (Positioning structure)
- 47:: Positioning hole (Positioning structure)

### BEST MODE FOR CARRYING OUT THE INVENTION

### <First embodiment>

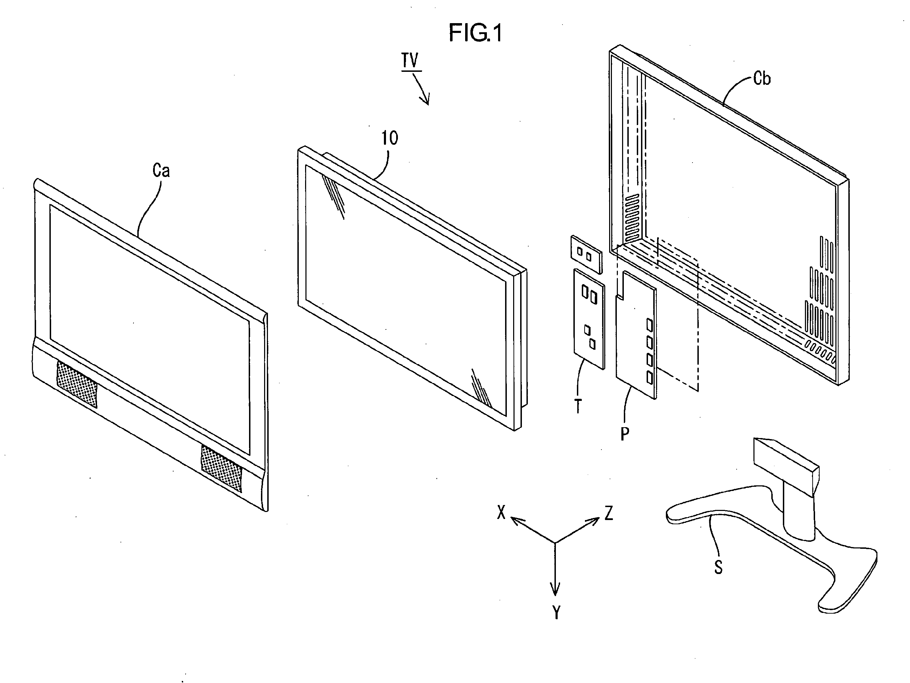

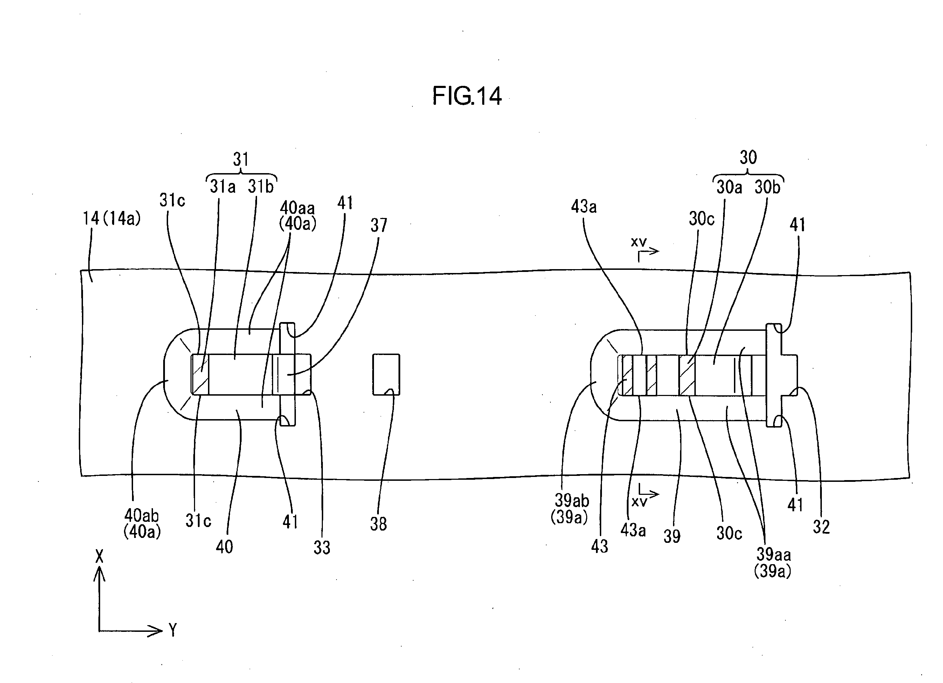

The first embodiment of the present invention will be explained with reference to FIGS. 1 to 15.

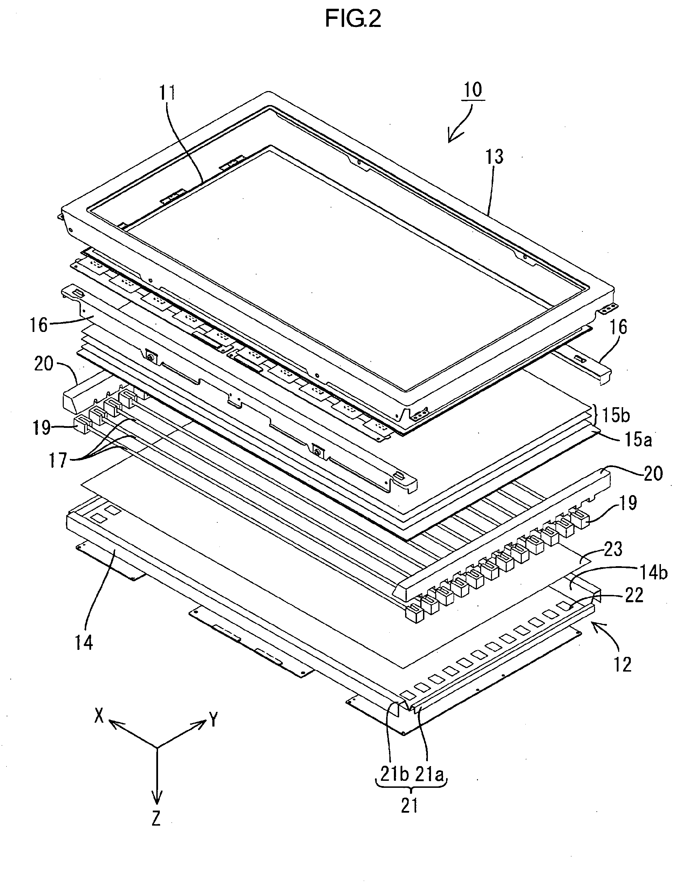

As illustrated in FIG. 1, the television receiver TV of this embodiment includes the liquid crystal display device 10, a front cabinet Ca, a rear cabinet Cb, a power source P, a tuner T, and a stand S. The cabinets Ca and Cb sandwich the liquid crystal display device 10 therebetween. The liquid crystal display device 10 is housed in the cabinets Ca and Cb. The liquid crystal display device (a display device) 10 is held by a stand S in a vertical position in which a display surface 11a is set along a substantially vertical direction. The liquid crystal display device 10 has a landscape rectangular overall shape. As illustrated in FIG. 2, the liquid crystal display device 10 includes a liquid crystal panel 11, which is a display panel, and a backlight unit (a lighting device) 12, which is an external light source. The liquid crystal panel 11 and the backlight unit 12 are held together by a frame-shaped bezel 13. X-axes, Y-axes and Z-axes are shown in the drawings. The axes indicate the respective directions in the drawings.

Next, the liquid crystal panel 11 and the backlight unit 12 included in the liquid crystal display device 10 will be explained (see FIGS. 2 to 4).

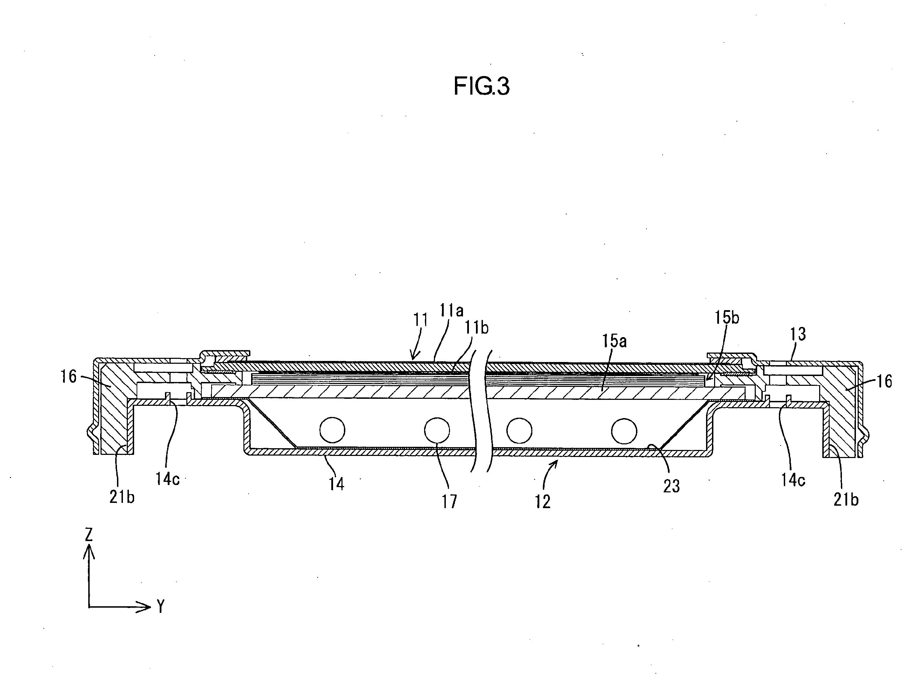

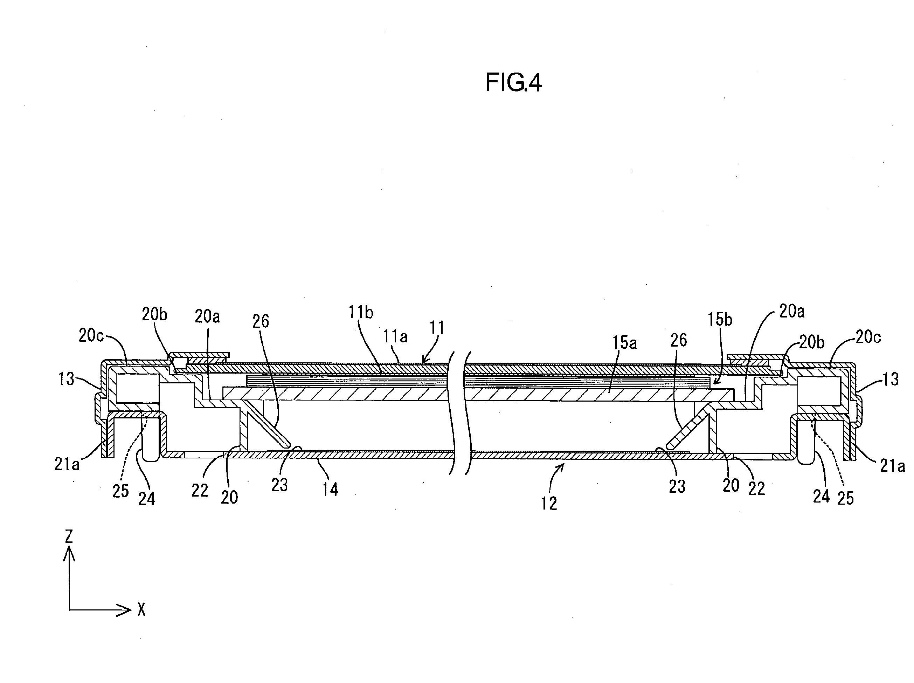

The liquid crystal panel (a display panel) 11 includes a pair of transparent glass substrates bonded together with a predetermined gap therebetween and liquid crystals sealed between the substrates. On one of the glass substrates, switching components (e.g., TFTs), pixel electrodes and an alignment film are arranged. The switching components are connected to gate lines and the source lines that are perpendicular to each other. The pixel electrodes are connected to the switching components. On the other glass substrate, color filters including R (red) G (green) B (blue) color sections in predetermined arrangement, a counter electrode and an alignment film are arranged. Polarizing plates 11a and 11b are arranged on outer surfaces of the glass substrates, respectively (see FIG. 3 and 4).

As illustrated in FIG. 2, the backlight unit 12 includes a chassis 14, a diffuser 15a, a plurality of optical sheets 15b and frames 16. The chassis 14 has a box-like overall shape and an opening 14b on a light exit surface side (the liquid crystal panel 11 side). The diffuser 15a is arranged so as to cover the opening 14b of the chassis 14. The optical sheets 15b are arranged between the diffuser 15a and the liquid crystal panel 11. The frames 16 are arranged along the respective long sides of the chassis 14. Long sides of the diffuser 15a are sandwiched between the chassis 14 and the respective frames 16. The backlight unit 12 further includes cold cathode tubes (lamps, light sources) 17, lamp clips 18, relay connectors 19 and holders 20 within the chassis 14. The lamp clips 18 are provided for mounting the cold cathode tubes 17 to the chassis 14. The relay connectors 19 are provided for establishing electric connections at ends of the cold cathode tubes 17. The holders 20 collectively cover the ends of the cold cathode tubes 17 and the relay connectors 19. In the backlight unit 12, a diffuser 15a side with respect to the cold cathode tubes 17 is a light exiting side. In FIGS. 2 to 4, the lamp clips 18 are not shown.

The chassis 14 is made of metal and formed in a shallow-box-like shape by sheet metal processing. The chassis 14 includes a rectangular bottom plate 14a, and outer rim portions 21, each of which extends upright from the corresponding side of the bottom plate 14a and has a substantially U shape. The outer rim portions 21 include short-side outer rim portions 21a and long-side outer rim portions 21b provided at the short sides and the long sides of the chassis 14, respectively. The bottom plate 14a has a plurality of through holes, connector mounting holes 22, along the long-side edges thereof for mounting the relay connectors 19. As illustrated in FIG. 3, fixing holes 14c are provided in the upper surface of the chassis 14 along the long-side outer rims 21b to bind the bezel 13, the frames 16 and the chassis 14 together with screws.

A reflection sheet 23 is disposed on an inner surface of the bottom plate 14a of the chassis 14 (on a side that faces the cold cathode tubes 17 or the diffuser 15a, the front-surface side). The reflection sheet 23 is a synthetic resin sheet having a surface in white that provides high light reflectivity. It is placed along the bottom plate surface of the chassis 14 so as to cover about an entire area of the bottom plate surface. In the chassis 14, the reflection sheet 23 is a reflection surface configured to reflect light from the cold cathode tubes 17 toward the diffuser 15a. As illustrated in FIG. 3, long-side edges of the reflection sheet 23 are lifted so as to cover the long-side outer rims 21b of the chassis 14 and sandwiched between the chassis 14 and the diffuser 15a. With the reflection sheet 23, light emitted from the cold cathode tubes 17 is reflected toward the diffuser 15a.

Each cold cathode tube 17 has an elongated tubular shape. A plurality of the cold cathode tubes 17 are housed in the chassis 14 such that they are arranged parallel to each other with the long-side direction thereof (the axial direction) aligned with the long-side direction of the chassis 14 (see FIG. 2) . Each cold cathode tube 17 is slightly separated from the bottom plate 14a (or the reflection sheet 23) of the chassis 14, and ends thereof are fitted in the respective relay connectors 19. The holders 20 are mounted so as to cover the relay connectors 19.

The holders 20 are made of white synthetic resin. Each of them has an elongated substantially box shape that extends along the short side of the chassis 14. As illustrated in FIG. 4, each holder 20 has steps on the front side such that the diffuser 15a and the liquid crystal panel 11 are held at different levels. A part of the holder 20 is placed on top of a part of the corresponding short-side outer rim 21a of the chassis 14 and forms a sidewall of the backlight device 12 together with the short-side outer rim 21a. Insertion pins 24 project from a surface of the holder 20 facing the outer rim 21a of the chassis 14. The holder 20 is mounted to the chassis 14 by inserting the insertion pins 24 into the insertion holes 25 provided in the top surface of the short-side outer rim 21a of the chassis 14.

The steps of the holder 20 include three surfaces parallel to the bottom plate surface of the chassis 14. The short edge of the diffuser 15a is placed on the first surface 20a at the lowest level. A sloped cover 26 extends from the first surface 20a toward the bottom plate surface of the chassis 14. A short edge of the liquid crystal panel 11 is placed on the second surface 20b. The third surface 20c at the highest level is provided such that it overlaps the short-side outer rim 21a of the chassis 14 and comes in contact with the bezel 13.

The diffuser 15a includes a plate-like member made of synthetic resin and light-scattering particles scattered inside the plate-like member. The diffuser 15a diffuses linear light emitted from the cold cathode tubes 17 that are tubular light sources. The short-side edges of the diffuser 15a are placed on the first surfaces 20a of the holders 20 and no binding force is applied thereto in the vertical direction. As illustrated in FIG. 3, each long-side edge of the diffuser 15a is sandwiched between the chassis 14 (or the reflection sheet 23) and the frame 16, and fixed.

The optical sheets 15b on the diffuser 15a include a diffusing sheet, a lens sheet, and a reflecting-type polarizing plate layered in this order form the diffuser 15a side. The optical sheet 15b has a function of converting light emitted from the cold cathode tubes 17 and passed through the diffuser 15a to planar light. The liquid crystal panel 11 is arranged on the uppermost surface of the optical sheets 15b. The optical sheets 15b are sandwiched between the diffuser 15a and the liquid crystal panel 11.

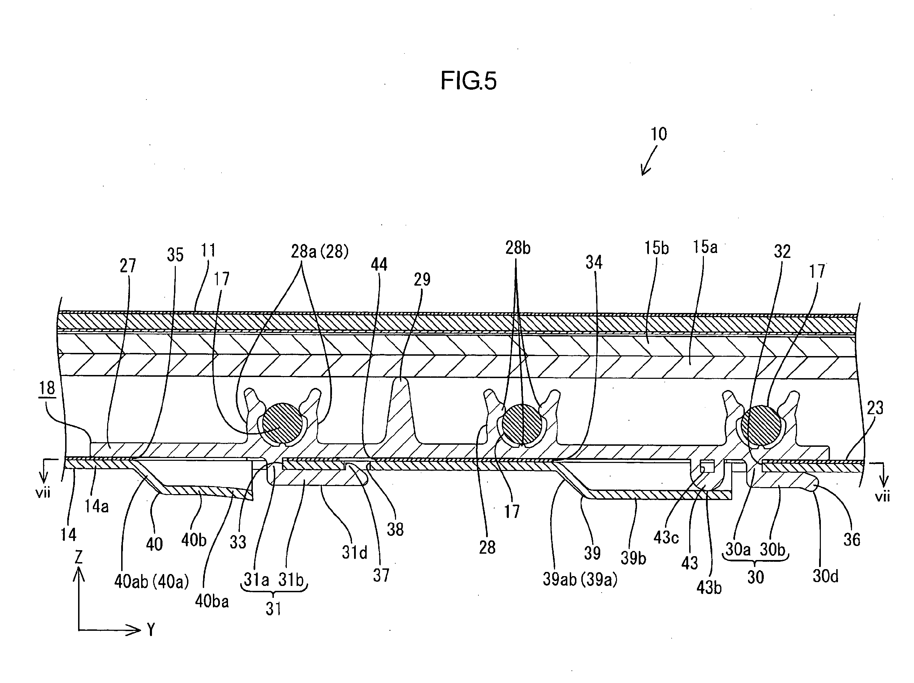

Next, the lamp clips 18 will be explained. The lamp clips 18 are arranged in dispersed locations within the bottom plate 14a of the chassis 14. Each lamp clip 18 is made of synthetic resin (e.g., polycarbonate) with surfaces in white that provides high light reflectivity. As illustrated in FIG. 5, the lamp clip 18 includes a main body 27 having a plate-like shape that extends along the bottom plate 14a (or the reflection sheet 23) of the chassis 14. The main body 27 is formed substantially in a rectangular shape in plan view. Each lamp clip 18 is mounted to the chassis 14 in a position (an orientation or in a condition) such that the length direction (the longitudinal direction) of the main body 27 matches with the Y-axis direction. Namely, the lamp clip 18 is in a position substantially parallel to the short-side direction of the chassis 14, or perpendicular to the axial direction of the cold cathode tube 17 (the length direction or the X-axis direction) and substantially parallel to a direction along the plate surface of the bottom plate 14a of the chassis 14. In the following description, the upper side and the lower side in the Z-axis direction in FIG. 5 are referred to as the front-surface side and the rear-surface side, respectively.

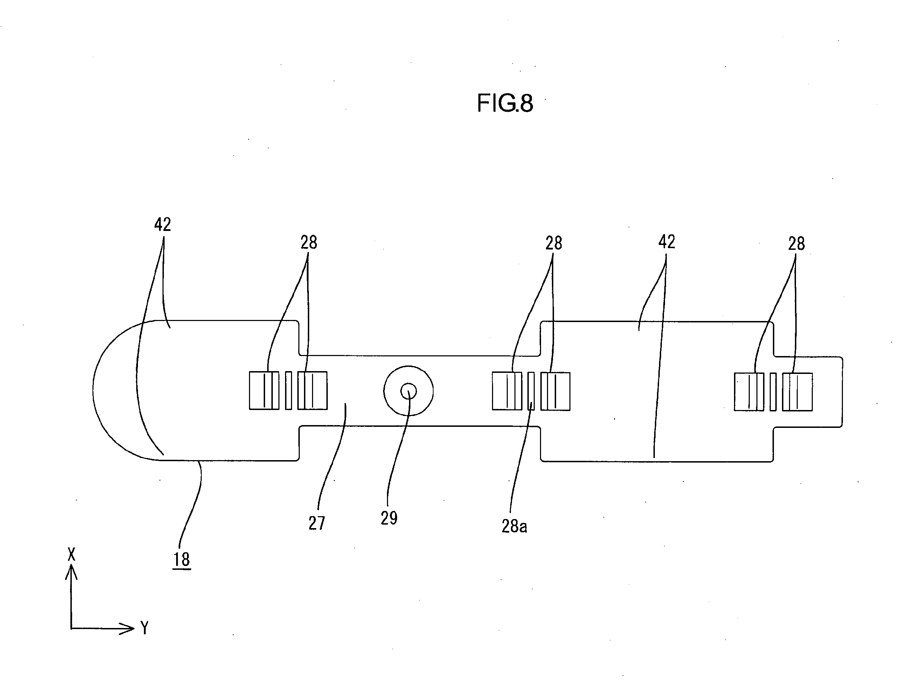

As illustrated in FIGS. 5 and 8, lamp holding parts 28 and a support pin 29 are provided on a surface of the main body 27 on the front-surface side (a surface opposite the diffuser 15a and the cold cathode tubes 17, a surface opposite from the chassis 14). Each lamp holding part 28 is provided for holding the cold cathode tube 17 at a predetermined level. The support pin 29 is provided for supporting the diffuser 15a at a higher level than the cold cathode tube 17. Three lamp holding parts 28 are arranged on the main body 27 away from each other in the length direction of the main body 27 (the Y-axis direction) . They hold the different cold cathode tubes 17. Each lamp holding part 28 includes a pair of arms 28a that rises from the main body 27 toward the front. Each arm 28a is in a form of a cantilever arm. Each arm 28a has a support protrusion 28b that protrudes inward from the inner surface of a distal-end portion thereof. Furthermore, a support protrusion 28b in the same shape as the above support protrusion 28b is provided on the inner bottom surface of the lamp holding part 28. The lamp holding part 28 holds the cold cathode tube 17 at the three points with the support protrusions 28b. A gap to which light travels is provided between the outer periphery of the cold cathode tube 17 and the inner surface of the lamp holding part 28. Intervals between the lamp holding parts 28 are substantially constant and equal to intervals between the cold cathode tubes 17 arranged inside the chassis 14. The support pin 29 is located around the middle between the left lamp holding part 28 in FIG. 5 and the center lamp holding part 28 with respect to the length direction of the main body 27. The support pin 29 projects more to the front-surface side than the lamp holding parts 28, that is, it is highest in the lamp clip 18. During mounting or removing the lamp clip 18 to or from the chassis 14, a worker can use the support pin 29 as a holding part that the worker holds for the mounting or the removing.

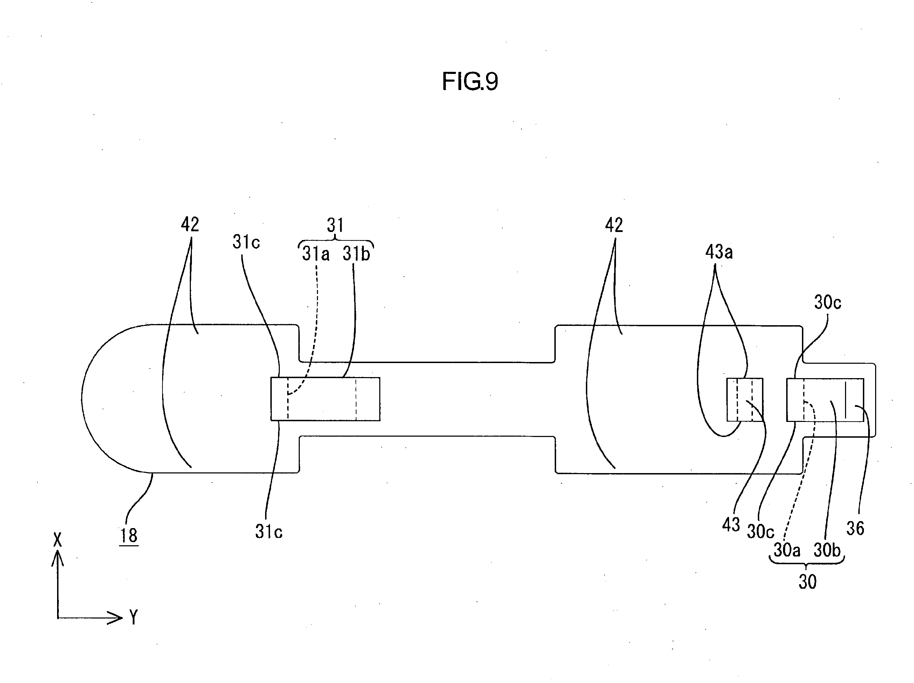

As illustrated in FIGS. 5 and 9, two mounting parts 30 and 31 are provided on the rear surface of the main body 27 (on the surface opposite the chassis 14 and the reflection sheet 23, or the surface opposite from the diffuser 15a and the cold cathode tubes 17). The mounting parts 30 and 31 are provided as mounting structures for holding the lamp clip 18 to the chassis in an initial condition when it is mounted. The mounting parts 30 and 31 are away from each other in the length direction of the main body 27. The bottom plate 14a of the chassis 14 has two mounting holes for each lamp clip 18 in a location where the lamp clip 18 is mounted. The mounting holes 32 and 33 are provided as mounting structures for the lamp clip 18. In the mounting holes 32 and 33, the corresponding mounting parts 30 and 31 are inserted, respectively. The reflection sheet 23 has two insertion holes 34 and 35 for each lamp clip 18 in which the mounting parts 30 and 31 are inserted, respectively. The insertion holes 34 and 35 are provided continuously from the respective mounting holes 32 and 33 of the chassis 14. To distinguish one of the mounting parts 30 and 31 from the other, they are numbered from the right in FIG. 5 and referred to as the first mounting part 30 and the second mounting part 31. To distinguish one of the mounting holes 32 and 33 from the other, they are numbered from the right in FIG. 5 and referred to as the first mounting hole 32 and the second mounting hole 33. To distinguish one of the insertion holes 34 and 35 from the other, they are numbered from the right in FIG. 5 and referred to as the first insertion hole 34 and the second insertion hole 35.

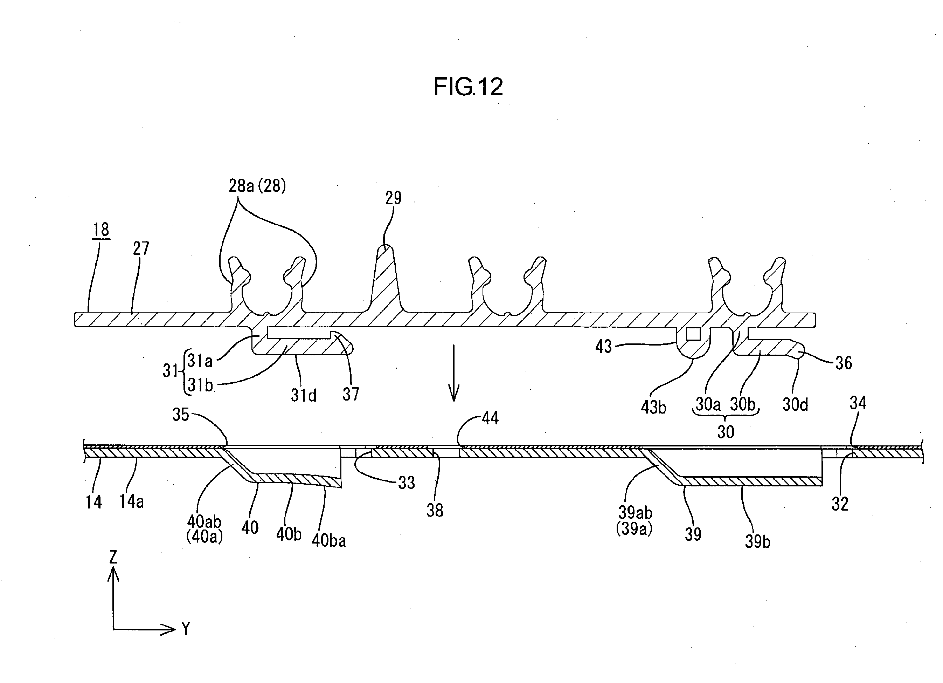

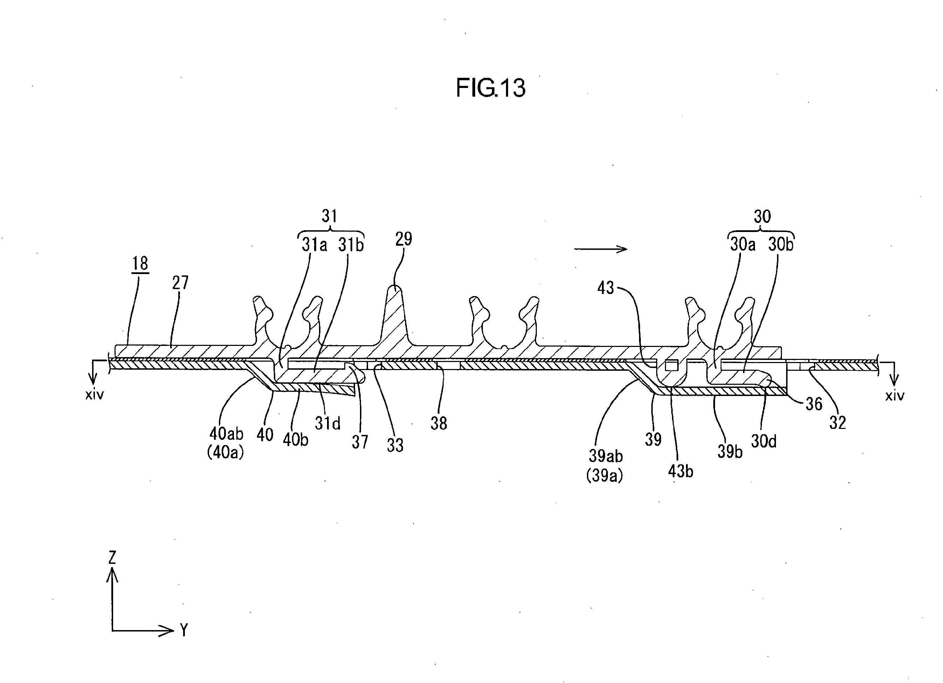

Next, the mounting structures for mounting the lamp clips 18 to the chassis 14, mentioned earlier, will be explained in detail. First of all, overviews of the mounting structures and a mounting procedure will be briefly explained. As illustrated in FIG. 5, the mounting parts 30 and 31 are formed in hook-like shapes that extend along the rear surface (the plate surface) of the main body 27. The mounting parts 30a and 31 are inserted in the respective mounting holes 32 and 33 of the chassis 14, and the respective insertion holes 34 and 35 of the reflection sheet 23 so as to project from the rear of the chassis 14. Then, the lamp clip 18 is slid along the length direction of the main body 27 (the Y-axis direction or the plate surface direction of the bottom plate 14a of the chassis 14). As a result, the chassis 14 and the reflection sheet 23 are sandwiched between the main body 27 and the mounting parts 30 and 31 (see FIGS. 12 and 13) . The sliding direction in which the lamp clip 18 is slid with respect to the chassis 14 matches the Y-axis direction. Next, detailed structures of the mounting parts 30 and 31, the mounting holes 32 and 33, and the insertion holes 34 and 35 will be explained.

The first mounting part 30 and the second mounting part 31 have a common structure. The common structure will be explained. As illustrated in FIG. 9, the first mounting part 30 and the second mounting part 31 are rectangular in plan view. The length direction (the longitudinal direction) and the width direction (the short-side direction) of the first mounting part 30 and the second mounting part 31 match those of the main body 27, respectively. The first mounting part 30 and the second mounting part 31 are located around the center of the main body 27 in the width direction.

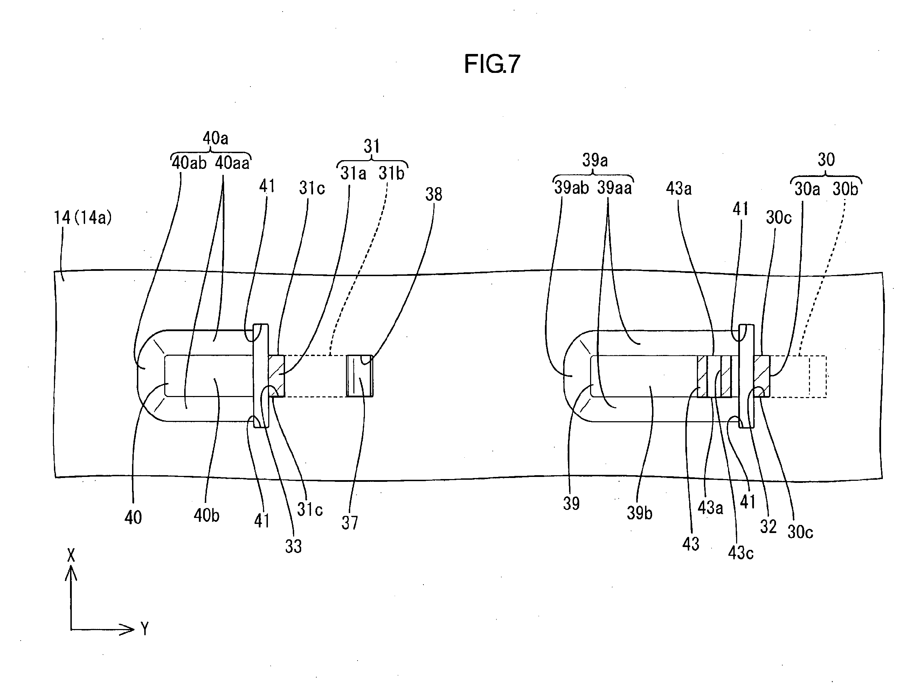

The first mounting part 30 includes a base portion 30a and a holding portion 30b. The second mounting part 31 includes a base portion 31a and a holding portion 31b. The base portions 30a and 31a project from the rear surface of the main body 27 to the rear-surface side (to the chassis 14 side). The holding portions 30b and 31b project from ends of the base portions 30a and 31a, respectively, and extend along the main body 27. The first mounting part 30 and the second mounting part 31 have L-like shapes in front view. The base portions 30a and 31a project from the main body 27 in the Z-axis direction, that is, in the direction perpendicular to the plate surface of the main body 27. Namely, the base portions 30a and 31a rise substantially upright from the main body 27. As illustrated in FIG. 7, the base portions 30a and 31a have rectangular cross sections when they are cut along the main body 27. The short-side directions thereof match the Y-axis direction and the long-side directions thereof match the X-axis direction.

As illustrated in FIG. 5, the holding portions 30b and 31b are formed in cantilever plate-like shapes so as to project from the ends of the main portions 30a and 31a, respectively, and extend to the right in FIG. 5 in the length direction (the Y-axis direction) of the main body 27. The sliding direction in which the lamp clip 18 is slid during mounting the lamp clip 18 to the chassis 14, that is, a mounting direction matches a direction in which the holding portions 30b and 31b project from the base portions 30a and 31a (a direction to the right in FIG. 5). The sliding direction in which the lamp clip 18 is slid during removal of the lamp clip 18 from the chassis 14, that is, a removal direction matches a reverse direction opposite to the direction in which the holding portions 30b and 31 project from the base portions 30a and 31a (a direction to the left in FIG. 5). The holding portions 30b and 31b project from the ends of the respective base portions 30a and 31a substantially perpendicular to the base portion 30a and 31a, and extend parallel to the main body 27. Moreover, the holding portions 30b and 31b face the main body 27. Each of the holding portions 30b and 31b is elastically deformable (or elastically movable) in the Z-axis direction with the base point, at which the holding portion 30b/31b connects to the base portion 30a/31a, as a support point. Namely, it is elastically deformable in a direction that crosses the projecting direction from the base portion 30a/31a. The holding portions 30b/31b moves toward or away from the main body 27 according to the elastic deformation.

Next, differences in structures between the first mounting part 30 and the second mounting part 31 will be explained. As illustrated in FIG. 5, the base portion 30a of the first mounting part 30 is located on the rear side (the rear-surface side) of the right lamp holding part 28 in FIG. 5 among those on the main body 27. Namely, the first mounting part 30 is located on the rear-surface side behind the lamp holding part 28 in an edge portion away from the support pin 29. The holding portion 30b of the first mounting part 30 projects from the base portion 30a in the opposite direction to the support pin 29. The holding portion 30b has a length defined such that a distal end thereof is located inner than the right end of the main body 27 in FIG. 5, that is, the front end of the main body 27 in the mounting direction.

The holding portion 30b of the first mounting part 30 has a guide 36 at the end (the distal end). The guide 36 is configured to support mounting of the lamp clip 18 to the chassis 14. The guide 36 is slanted so as to form an obtuse angle with the holding portion 30b, that is, the guide 36 is angled with respect to the holding portion 30b so as to separate farther away from the main body 27 as . Namely, the guide 36 is formed such that a distance to the main body gradually increases as it goes toward the tip. The width of the guide 36 is constant throughout the length thereof. The end of projection of the first mounting part 30 from the main body corresponds to the tip of the guide 36.

The base portion 31a of the second mounting part 31 is provided in an area of the rear surface of the main body 27 (on the rear-surface side), which corresponds to the left lamp holding part 28 in FIG. 5, that is, the lamp holding part 28 located at the edge area close to the support pin 29. Namely, the second mounting part 31 is located on an opposite side of the support pin 29 with respect to the first mounting part 30 in the length direction of the main body 27. The holding portion 31b of the second mounting part 31 extends from the base portion 31a toward the support pin 29 and the length thereof is larger than that of the holding portion 30b of the first mounting part 30. At the end of the holding portion 31b of the second mounting part 31, a stopper 37 that projects toward the main body 27 is provided. A surface of the stopper 37 opposite the main body 27 is a tapered surface. A surface of the stopper 37 opposite the base portion 31a is upright substantially parallel to the outer surface of the base portion 31a. The surface is a substantially flat surface along a direction (the Z-axis direction) perpendicular to the sliding direction (the Y-axis direction) of the lamp clip 18 with respect to the chassis 14. The surface is a surface held against the chassis 14.

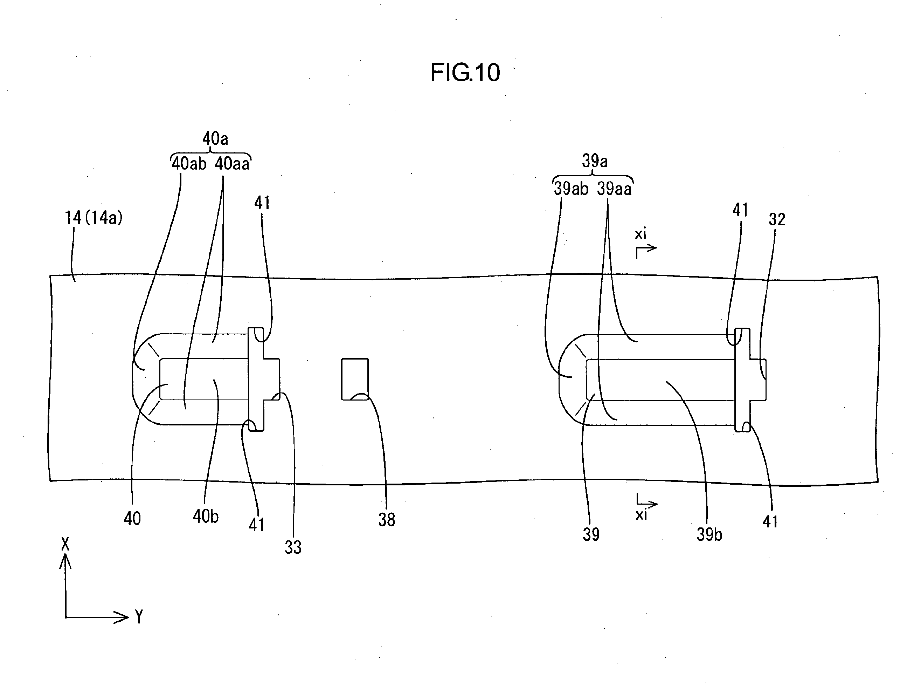

Next, the first mounting holes 32 and the second mounting holes 33 formed in the chassis 14 will be explained. As illustrated in FIGS. 5 and 10, each first mounting hole 32 and each second mounting hole 33 are through holes formed in the bottom plate 14a. They are provided to pass the corresponding first mounting part 30 and the corresponding second mounting part 31 through the chassis 14 to the rear-surface side. The widths of the first mounting hole 32 and the second mounting hole 33 are equal to or larger than those of the first mounting part 30 and the second mounting part 31, respectively. Therefore, side surfaces 30c and 31c located at ends of the X-axis dimensions of the base portions 30a and 31a of the mounting parts 30 and 31 are in contact with the inner walls of the mounting holes 32 and 33, respectively. Furthermore, the chassis 14 has a stopper hole 38 for receiving the stopper 37 formed in a location away from the second mounting hole 33 to the right in FIG. 5, that is, away from the second mounting hole 33 in the mounting direction.

The chassis 14 also has receiving portions 39 and 40. The receiving portions 39 and 40 are provided adjacent to the first mounting hole 32 and the second mounting hole 33, respectively, on the left sides in FIG. 5. Namely, parts of the chassis 14 adjacently located to the mounting parts 30 and 32, respectively, on opposite sides of the mounting parts 30 and 31 to edges of the mounting holes 32 and 33 held by the holding portions 30b and 31b project outward to the rear-surface side so as to receive the mounting parts 30 and 31, respectively. Each of the receiving portions 39 and 40 is formed in a pouch-like shape. Each receiving portion 39/40 has an opening on the inner side of the chassis 14 (the front side in the Z-axis direction) and on the mounting hole 32/33 side (the right side in the Y-axis direction) . The mounting parts 30 and 31 are inserted in or removed from the receiving portions 39 and 40, respectively, along the Z-axis direction from or to the front side, and along the Y-axis direction from or to the right side. The lamp clip 18 can be moved among three positions along the Z-axis direction or the Y-axis direction in sequence that can be reversed. The positions include: a removed position in which the mounting part 30/31 is completely removed from the bottom plates 14a of the chassis 14 (FIG. 12); a hold position in which the mounting part 30/31 is in the receiving portion 39/40 but out of the mounting hole 32/33 (FIG. 13); a mounting position in which the mounting part 30/31 is out of the receiving portion 39/40 but in the mounting hole 32/33 (FIG. 5). To distinguish one of the receiving portions 39 and 40 from the other, they are numbered from the right in FIG. 5 and referred to as the first receiving portion 39 and the second receiving portion 40.

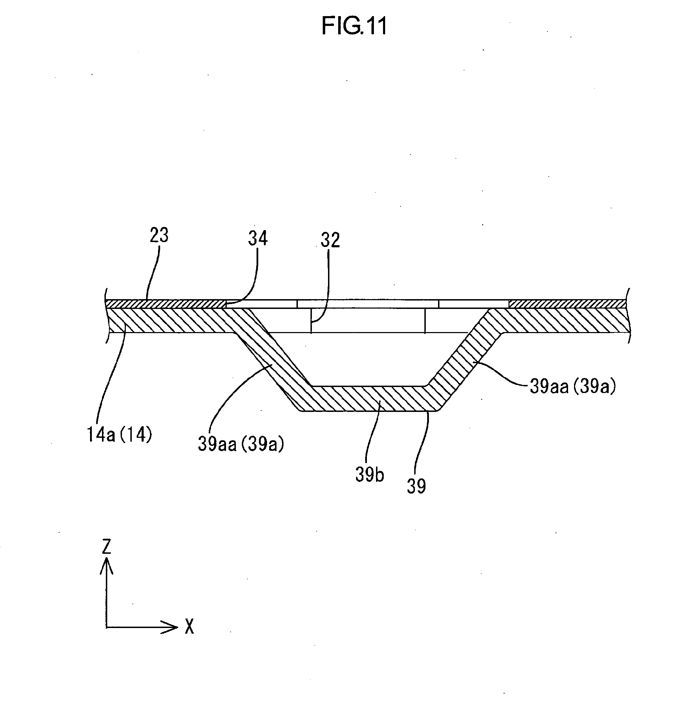

The first receiving portion 39 and the second receiving portion 40 have a common structure, and the common structure will be explained. As illustrated in FIG. 10, each of the receiving portions 39 and 40 is substantially rectangular in plan view similar to the mounting parts 30 and 31. The long-side direction and the short-side direction of the receiving portion 39/40 match those of the mounting part 30/31. As illustrated in FIGS. 5 and 11, the receiving portion 39/40 includes sidewalls 39a/40a that rise from the bottom plate 14a of the chassis 14 outward to the rear-surface side, and a bottom wall 39b/40b that continues from distal ends of the sidewalls 39a/40a. The sidewalls 39a/40a are angled and thus an overall shape of the receiving portion 39/40 is a tapered shape that narrows toward a projecting end. The sidewalls 39a/40a include long sidewalls 39aa/40aa along the Y-axis direction (the long-side direction) and a short sidewall 39ab/40ab along the X-axis direction (the short-side direction). The short sidewall 39ab/40ab continues from an edge of the long sidewall 39a/40a away from the mounting hole 32/33 to an edge of the other long sidewall 39a/40a away from the mounting hole 32/33. Ends of the long sidewalls 39aa/40aa and the bottom wall 39b/40b on a side opposite from the short sidewall 39ab/40ab form an opening edge of the opening that opens toward the mounting hole 32/33. The sidewalls 39a/40a are angled so as to form an obtuse angle with the bottom plate 14a of the chassis 14. Therefore, the receiving portion 39/40 is formed in a tapered shape, that is, the long dimension and the short dimension of the receiving portion 39/40 gradually decrease on the projecting side (the rear-surface side). An inner space is large toward the base portion (on the front-surface side), that is, a size of inner space of the receiving portion 39/40 gradually increases from the projection end toward the base portion (on the front-surface side) of the sidewalls 39a/40a. When the lamp clip 18 is moved from the removed position to the hold position, the mounting part 30/31 can be easily inserted in the receiving portion 39/40.

As illustrated in FIG. 10, a distance between distal ends of the long sidewalls 39aa/40aa among the sidewalls 39a/40a of the receiving portion 39/40, that is, the width of the bottom wall 39b/40b (a dimension measuring in the X-axis direction) is set substantially equal to the widths of the mounting part 30/31 and the mounting hole32/33. When the mounting part 30/31 is inserted in the receiving portion 39/40 (the hold position), the projection ends of the mounting part 30/31 are in contact with the distal end of the long sidewalls 39aa/40aa. Namely, the mounting part 39/40 is sandwiched (or fitted) between the distal ends of the long sidewalls 39aa/40aa. The long sidewalls 39aa/40aa function as guide rails for the mounting part 30/31. Furthermore, the depth of the receiving portion 39/40, that is, a distance between the front surface of the bottom plate 14a of the chassis 14 and the inner surface of the bottom wall 39b/40b is substantially equal to the dimension of the projection of the mounting part 30/31 from the main body 27, as illustrated in FIG. 5. When the mounting part30/31 is inserted in the receiving portion 39/40, the projection-end surface of the mounting part 30/31 is in surface contact with the inner surface of the bottom wall 39b/40b. Namely, the inner surface of the bottom wall 39b/40b functions as a guide surface for the mounting part 30/31. The bottom wall 39b/40b is opposite the main body 27 of the lamp clip 18.

The receiving portion 39/40 includes the sidewalls 39a/40a that are angled. Therefore, the largest width of the receiving portion 39/40, that is, the distance between bases of the long sidewalls 39aa/40aa is larger than the width of the mounting part 30/31 or the mounting hole 32/33 by the thicknesses of the long sidewalls 39aa/40aa as illustrated in FIG. 10. To form the sidewalls 39a/40a so as to rise from the bottom plate 14a of the chassis 14, a slit 41 is formed in a part of the bottom plate 14a adjacent to the sidewalls 39a/40a and the mounting hole 32/33 (a boundary area). The slit 41 continues from the mounting hole 32/33.

As described above, the sidewalls 39a/40a of the receiving portion 39/40 are angled so that the mounting part 30/31 can be easily inserted in the receiving portion 39/40. They are angled also because of manufacturing-related reasons. In manufacturing process of the chassis 14, the receiving portion 39/40 is formed in a part of the bottom plate 14a by drawing. To effectively perform the drawing, the sidewalls 39a/40a should be angled. With the angled sidewalls 39a/40a, production efficiency of the chassis 14 increases. When the sidewalls 39a/40a are formed by drawing, stress concentrates at a boundary between the bases thereof and the bottom plates 14a. To disperse the stress, the slit 41 is wider than a dimension defined by the bases of the long sidewalls 39aa/40aa of the sidewalls 39a/40a. Specifically, the slit 41 cuts into the areas outer than the bases of the long sidewalls 39aa/40aa in the X-axis direction.

Because the bottom plate 14a of the chassis 14 has the receiving portions 39 and 40, the lamp clip 18 is set in the hold position relative to the bottom plate 14a of the chassis 14. If holes are formed continuously from the mounting holes 32 and 33, respectively, as receiving portions, the openings have a size equal to the size of the mounting parts 30 and 31 in plan view. In comparison to that, the bottom plate 14a of this embodiment only has the mounting holes 32 and 33, and opening areas thereof are significantly smaller than plan-view sizes of the mounting parts 30 and 31. Namely, the opening areas of the bottom plate 14a are smaller than the other case because of the receiving portions 39 and 40 in pouch-like shapes. The opening areas are in minimum sizes required for the mounting parts 30 and 31 to project from the rear surface of the chassis 14 to the outside. If light emitted from the cold cathode tubes 17 passes through the lamp clip 18 at some level, an amount of light that leaks to the outside on the rear-surface side through the openings (the mounting holes 32 and 33) in the bottom plate 14a of the chassis 14 is maintained at a minimum level.

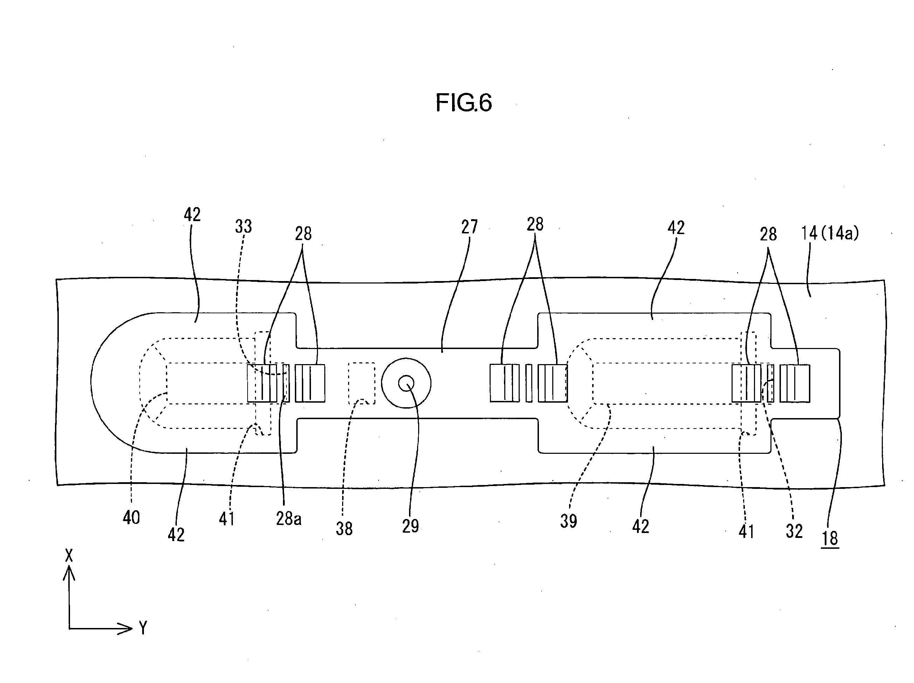

Each receiving portion 39/40 has the angled sidewalls 39a/40a and a plan-view size larger than the mounting part 30/31. The receiving portions 39 and 40 are formed such that parts of the bottom plate 14a (the reflection sheet 23) in which the receiving portions 39 and 40 are formed do not touch the main body 27 of the lamp clip 18. As illustrated in FIG. 6, the main body 27 of the lamp clip 18 has wide portions 42 in areas corresponding to the receiving portions 38 and 40. The wide portions 42 have widths larger than those of the receiving portions 39 and 40. When the lamp clip 18 is in the mounting position, the areas of the main body 27 overlap the receiving portions 39 and 40 in plan view. The wide portions 42 having widths relatively larger than the other areas are located in the overlapping areas. With this configuration, the main body 27 does not fall in the receiving portions 39 and 40 when it is set in the mounting position. Therefore, the mounting condition of the lamp clip 18 is stabilized.

Next, differences in structures between the receiving portions 39 and 40 will be explained. As illustrated in FIG. 5, the first receiving portion 39 is longer than the second receiving portion 40. The long dimension of the first receiving portion 39 is larger than that of the first mounting part 30. The long dimension of the second receiving portion 40 is substantially equal to that of the second mounting part 31. The bottom wall 40b of the second receiving portion 40 is slanted such that the end where the second receiving portion 40 opens toward the second mounting hole 33 is farther out. Precisely, a part of the bottom wall 40b of the second receiving portion 40 on the short wall 40ab side is substantially flat with respect to the X-Y plane, and a part thereof on the opening end side is slanted such that a distance to the main body 27 increases as a distance to the second mounting hole 33 decreases. The part that is slanted is referred to as a slant portion 40ba. In the hold position, a gap in a predetermined size is provided between the bottom surface of the holding portion 31b of the second mounting part 31 and the inner surface of the bottom wall 40b. The gap becomes larger toward the front end of the holding portions 31b, and allows elastic displacement of the holding portion 31b of the second mounting part 31, which is in a cantilever shape (FIG. 13).

The lamp clip 18 of this embodiment has a contact part 43that comes in contact with the inner surface of the receiving portion 39/40. The contact part 43 is provided for stabilizing the sliding movement of the lamp clip 18 during mounting or removale or the mounting condition of the lamp clip 18. The contact part 43 is located on the rear surface of the main body 27 and on the left side with respect to the first mounting part 30 in FIG. 5, that is, adjacent to and on an opposite side of the first mounting part 30 to the projecting direction of the holding portion 30b from the base portion 30a. The contact part 43 projects to the rear-surface side along the Z-axis direction similar to the first mounting part 30. The contact part 43 and the first mounting part 30 are inserted in the first receiving portion 39. The contact part 43 is in the first receiving portion 39 when the lamp clip 18 is in the hold position illustrated in FIG. 13 or in the mounting position illustrated in FIG. 5. When the lamp clip 18 is moved between the hold position and a locked position, the contact part 43 is always inside the first receiving portion 39. While the lamp clip 18 is moved, the contact part 43 rubs against the inner surface of the first receiving portion 39. A distance between the contact part 43 and the first mounting part 30 is substantially larger than a distance between the end of the first mounting part 30 on the first mounting hole 32 side and the end of the first receiving portion 39 on the same side. The long dimension of the first receiving portion 39 is larger than a total dimension of the long dimension of the first mounting part 30, a Y-axis dimension of the contact part 43 and a distance between the first mounting part 30 and the contact part 43.

The contact part 43 has a block-like overall shape. As illustrated in FIG. 9, the contact part 43 is rectangular in plan view. As illustrated in FIG. 5, the contact part 43 is in a semicircular shape in side view. As illustrated in FIG. 9, the contact part 43 has side surfaces 43a along the X-axis direction are substantially flat surfaces along the Y-Z plane. As illustrated in FIG. 5, a distal-end surface 43b is a curved surface in an arc shape. The contact part 43 has a hollow 43c at the center thereof when viewed from the side. The hollow 43c runs all the way through the contact part in the X-axis direction. The thickness of the contact part 43 is substantially constant in an entire area. In a molding process of the lamp clip 18, a sink is less likely to be produced.

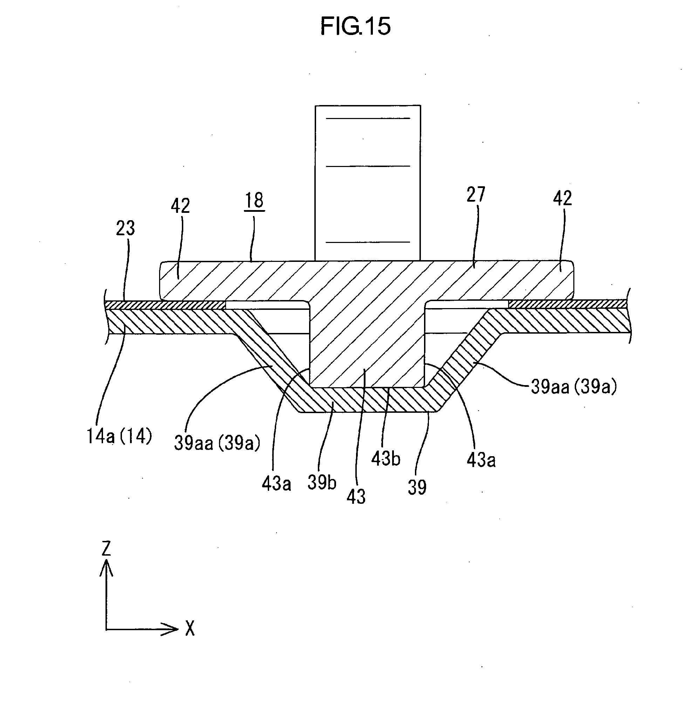

As illustrated in FIG. 9, the X-axis dimension of the contact part 43 (measuring in a direction perpendicular to the sliding direction) is substantially equal to the X-axis dimension of the first mounting part 30. The side surfaces 43a of the contact part 43 and the side surfaces 30c of the first mounting part 30 are substantially on the same plane. When the contact part 43 and the first mounting part 30 are in the first receiving portion 39, distal ends of the side surfaces 43a and distal ends of the side surfaces 30c are in contact with distal ends of the long sidewalls 39aa (FIG. 15). Namely, the contact part 43 and the first mounting part 30 are sandwiched (or fitted) between the distal ends of the long sidewalls 39aa. The long sidewalls 39aa function as guide rails for the contact part 43 and the first mounting part 30.

As illustrated in FIG. 5, the projection dimension of the contact part 43 from the main body 27 is substantially equal to the projection dimension of the first mounting part 30. The distal-end surface 43b of the contact part 43 and the distal-end surface 30d of the first mounting part 30 are substantially on the same plane. When the contact part 43 and the first mounting part 30 are in the first receiving portion 39, the distal-end surface 43b and the distal-end surface 30d are in contact with the inner surface of the bottom wall 39b of the first receiving portion 39 (FIG. 13). The inner surface of the bottom wall 39b functions as a guide surface for the contact part 43 and the first mounting part 30. When the lamp clip 18 is in the hold position and the distal-end surfaces 30d and 43b of the contact part 43 and the first mounting part 30 are in contact with the inner surface of the bottom wall 39b of the first receiving portion 39 (the second mounting part 31 is in the same condition), the surface of the main body 27 on the rear surface side is in contact with the reflection sheet 23. Moreover, the gap between the main body 27 and the mounting part 30 and the gap between the main body 27 and mounting part 31 are located at the same Z-axis position. Therefore, the lamp clip 18 is smoothly moved from the hold position to the mounting position.

Next, the first insertion hole 34 and the second insertion hole 35 in the reflection sheet 23 will be explained. As illustrated in FIG. 5, the first insertion hole 34 is formed such that first mounting hole 32 and the first insertion portion 39 are both within the first insertion hole 34. Namely, the first mounting part 30 can be inserted in the first mounting hole 32 and the first receiving portion 39 through the first insertion hole 34. The second insertion hole 35 is formed such that second mounting hole 33 and the second insertion portion 40 are both within the second insertion hole 35. Namely, the second mounting part 31 can be inserted in the second mounting hole 33 and the second receiving portion 40 through the second insertion hole 35. Furthermore, the reflection sheet 23 has a stopper insertion hole 44 through which the stopper 37 is inserted. The stopper insertion hole 44 is provided separately from the second insertion hole 35 on the right in FIG. 5 to the second insertion hole 35 so as to continue into the stopper hole 38.

Next, the functions of this embodiment having the above structures will be explained. Mounting of the lamp clips 18 to the chassis 14 in the manufacturing process of the backlight unit 12 will be explained in detail.

After the reflection sheet 23 is placed in the chassis 14, the lamp clips 18 are mounted to the respective locations of the bottom plate 14a. During mounting, a worker can hold the holding part 29 of each lamp clip 18, which projects farther to the front-surface side. The lamp clip 18 is held in the removed position illustrated in FIG. 12 with the first mounting part 30 and the contact part 43 positioned above the first insertion portion 39 in plan view and with the second mounting part 31 positioned above the second insertion portion 40. Then, the lamp clip 18 is pushed in the bottom plate 14a of the chassis 14 from the front-surface side along the Z-axis direction. As a result, the first mounting part 30 and the contact part 43 are inserted in the first receiving portion 39, and the second mounting part 31 is inserted in the second receiving portion 40. When the lamp clip 18 is in the hold position, the surface of the main body 27 on the rear-surface side is in contact with the reflection sheet 23. Moreover, the distal-end surfaces 30d and 43b of the first mounting part 30 and the contact part 43 are in contact with the inner surface of the bottom wall 39b of the first receiving portion 39, and the distal-end surface 31d of the second mounting part 31 is in contact with the inner surface of the bottom wall 40b of the second receiving portion 40. As a result, a Z-axis position of the lamp clip 18 is defined relative to the bottom plate 14a of the chassis 14. In this condition, the gap between the holding portion 30b of the mounting part 30 and the edge of the mounting hole 32 are at the same Z-axis position. The gap between the holding portion 31b of the mounting part 31 and the main body 27 and the edge of the mounting hole 33 are at the same Z-axis position.

As illustrated in FIG. 15, when the lamp clip 18 is in the hold position, the distal ends of the first mounting part 30 and the contact part 43 are sandwiched between the long sidewalls 39aa of the first receiving portion 39. The distal end of the second mounting part 31 is sandwiched between the long sidewalls 40aa of the second receiving portion 40. The lamp clip 18 is positioned relative to the bottom plate 14a of the chassis 14 with respect to the X-axis direction, that is, a direction perpendicular to the sliding direction. In this condition, the mounting parts 30 and 31 and the mounting holes 32 and 33 are located at the same X-axis position.

Next, the lamp clip 18 is slid in the direction indicated by an arrow in FIG. 13, that is, along the Y-axis direction to the mounting position. In this process, outer surfaces (side surfaces 30c and 43a, and the distal-end surfaces 30d and 43b) of the first mounting part 30 and the contact part 43 located on the front side (the right side in FIG. 13) with respect to the support pin 29, which is a holding part, rub against the inner surface of the first receiving portion 39 at two points that are away from each other in the Y-axis direction. The first mounting part 30 and the contact part 43 move ahead of the support pin 29 so as to smoothly guide the siding movement. When the first mounting part 30 exits the first receiving portion 39 and enters the first mounting hole 32, the first mounting part 30 passes through the slit 41 that is wider than the first mounting part 30. Therefore, the first mounting part 30 cannot be guided. However, the contact part 43 is in the first receiving portion 39 and continues to guide the sliding movement. Outer surfaces of the second mounting part 31 located on the rear side (the left side in FIG. 13) with respect to the support pin 29, which is a holding part, rub against the inner surface of the second receiving portion 40. Therefore, the sliding movement is further smoothly guided. In the mounting process of the lamp clip 18, the lamp clip 18 can be slid substantially straight without being tilted relative to the Y-axis direction. Therefore, the mounting can be very easily performed.

During mounting, the stopper 37 of the second mounting part 31 goes over the edge of the second mounting hole 33 when the lamp clip 18 is at a predetermined position. The holding portion 31b elastically deforms so as to separate from the main body 27 and the bottom plate 14a. The bottom wall 30b of the second receiving portion 40 is angled and thus the elastic deformation of the holding portion 31b is allowed. The guide 36 rubs against the edge of the first mounting hole 32 and the holding portion 30b of the first mounting part 30 is smoothly guided to the rear-surface side of the bottom plate 14a. The lamp clip 18 is guided such that the edge of the first mounting hole 32 is placed in the gap between the holding portion 30b and the main body 27. As illustrated in FIG. 5, when the lamp clip 18 is in the mounting position, the stopper 37 is locked in the stopper hole 38. The holding portion 31b of the second mounting part 31 returns to the original shape with resilience. The stopper 37 is inserted in the stopper hole 38 and the opposed surfaces are held against each other. This restricts the lamp clip 18 from accidentally moving from the mounting position to the hold position (in the removing direction). In the mounting position, the edge of the first mounting hole 32 is sandwiched between the holding portion 30b of the first mounting part 30 and the main body 27, and the edge of the second mounting hole 33 is sandwiched between the holding portion 31b of the second mounting part 31 and the main body 27. This restricts the lamp clip 18 from accidentally moving in the Z-axis direction. Therefore, the lamp clip 18 is fixed in the mounting position.

When the lamp clip 18 is mounted, the contact part 43 is entirely inserted in the first receiving portion 39 as illustrated in FIGS. 5 and 7. The sidewalls 43a and the distal-end surface 43b are in contact with the inner surface of the first receiving portion 39. With this configuration together with the mounting parts 30 and 31, the lamp clip 18 is more stably fixed in the mounting position. When the lamp clip 18 is mounted, the parts of the main body 27 overlapping the receiving portions 39 and 40 in plan view are the wide portions 42. The wide portions 42 are properly kept in contact with the bottom plate 14a (the reflection sheet 23) of the chassis 14. The main body 27 is less likely to fall in the receiving portions 39 and 40. This configuration contributes to stabilizing the mounting condition.

When the lamp clip 18 needs to be removed from the chassis 14 due to maintenance or other reasons, the holding portion 31b of the second mounting part 31 is elastically deformed by applying a force with a jig to remove the stopper 37 from the stopper hole 38. Then, the lamp clip 18 is slid in the Y-axis direction from the mounting position to a release position, and moved from the bottom plate 14a of the chassis 14 along the Z-axis direction from the release position to the removed position.

As described above, the backlight unit 12 of this embodiment includes the chassis 14 having the mounting holes 32 and 33, the cold cathode tubes 17 arranged inside the chassis 14, and the lamp clips 18. The lamp clips 18 are mounted to the chassis 14 through the mounting holes 32 and 33 and hold the cold cathode tubes 17. Each lamp clip 18 includes the main body 27 arranged inside the chassis 14 and the mounting parts 30 and 31. Each mounting part 30/31 has the base portion 30a/31a and the holding portion 30b/31b. The base portion 30a/31a projects from the main body 27 to the outside of the chassis 14 through the mounting hole 32/33. The holding portion 30b/31b projects from the base portion 30a/31a along the main body 27. The edge of the mounting hole 32/33 is sandwiched between the holding portion 30b/31b and the main body 27. The chassis 14 has the receiving portions 39 and 40. Each receiving portion 39/40 formed by drawing a part of the chassis 14 outward. The part is adjacent to the edge of the mounting hole 32/33 on the side away from the edge that is held between the main body 17 and the holding portion 30b/31b of the mounting part 30/31. The receiving portion 39/40 receives the mounting part 30/31.

During mounting the lamp clip 18 to the chassis 14, the mounting parts 30 and 31 are inserted in the respective receiving portions 39 and 40 and then the lamp clip 18 is moved in the direction in which the holding portions 30b and 31b extend from the respective base portions 30a and 31a. The base portions 30a and 31a and the holding portions 30b and 31b project to the outside of the chassis 14 through the respective mounting holes 32 and 33. The edges of the mounting holes 32 and 33 are sandwiched between the main body 27 and the respective holding portions 30b and 31. As a result, the lamp clip 18 is mounted to the chassis 14. The receiving portions 39 and 40 that receive the respective mounting parts 30 and 31 are formed by drawing parts of the chassis 14 outward. In comparison to receiving portions formed continuously to the mounting holes 32 and 33, the opening areas of the chassis 14 can be reduced. Even if some rays of light inside the chassis 14 are not reflected by the surfaces of the lamp clips 18 and pass through the lamp clips 18, the rays are less likely to leak to the outside of the chassis 14.

Each lamp clip 18 also has the contact part 43 arrange at the opposite side of the holding portion 30b on the main body 27 with respect to the base portion 30a of the first mounting part 30. The contact part 43 is inserted in the first receiving portion 39 and in contact with the inner surface of the first receiving portion 39. When the first mounting part 30 and the contact part 43 are inserted in the first receiving portion 39, the contact part 43 is in contact with the inner surface of the first receiving portion 39. When the lamp clip 18 is moved in the direction in which the holding portion 30b projects, the contact part 43 rubs against the inner surface of the first receiving portion 39. Namely, the movement of the lamp clip 18 is guided. When the lamp clip 18 is mounted and the edge of the first mounting hole 32 is sandwiched between the holding portion 30b and the main body 27, the contact part 43 is in contact with the inner surface of the first receiving portion 39. This reduces backlash between the mounted lamp clip 28 and the chassis 14.

The first receiving portion 39 and the contact part 43 are formed such that the ends of the sidewalls 43, which are along the projecting direction, and the distal-end surface 43b of the contact part 43 are in contact with the inner surface of the first receiving portion 39. This configuration enhances the guide function for moving the lamp clip 18 during mounting and the backlash reduction function for reducing the backlash in the mounting condition.

The first receiving portion 39 is formed such that the gap between the main body 27 and the holding portion 30b aligned with the edge of the first mounting hole 32 when the distal-end surface 43b of the contact part 43 is in contact with the first receiving portion 39. When the contact part 43 and the first mounting part 30 are inserted in the first receiving portion 39, the distal-end surface 43b of the contact part 43 is in contact with the inner surface of the first receiving portion 39. As a result, the gap between the main body 27 and the holding portion 30b is aligned with the edge of the first mounting hole 32. Therefore, the lamp clip 18 can be smoothly moved.

The distal-end surface 43b of the contact part 43 is substantially on the same plane as the distal-end surface 30d of the first mounting part 30. When the contact part 43 and the first mounting part 30 are inserted in the first receiving portion 39, the distal-end surface 43b of the contact part 43 and the distal-end surface 30d of the first mounting part 30 are in contact with the inner surface of the first receiving portion 39. This further enhances the guide function for moving the lamp clip 18 during mounting.

The sidewalls 43a of the contact part 43 along the projecting direction is substantially on the same plane as the sidewalls 30c of the first mounting part 30 along the projecting direction. When the contact part 43 and the first mounting part 30 are inserted in the first receiving portion 39, the sidewalls 43a of the contact part 43 and the sidewalls 30c of the first mounting part 30 are in contact with the inner surface of the first receiving portion 39. This further enhances the guide function for moving the lamp clip during mounting.

The first receiving portion 39 has a tapered overall shape that gradually narrows toward the end of the projection. It includes the sidewalls 39a that rise from the chassis 14 outward and tilt toward the chassis 14, and the bottom wall 39b that continues from the ends of the sidewalls 39a. Because the first insertion portion 39 has the tilted sidewalls 39a and the tapered shape, the contact part 43 and the first mounting part 30 are easily inserted therein. Namely, the mounting work can be easily performed.

The chassis 14 has the slit 41 in the area adjacent to the sidewalls 39a and the first mounting hole 32. The slit 41 continues to the first mounting hole 32. With this configuration, the tilted sidewalls 39a are easily formed in preferable shapes

The slit 41 is wider than a dimension defined by the bases of the sidewalls 39a. With this configuration, stress is less likely applied to parts of the chassis 14 around the basses of the sidewalls 39a when the tilted sidewalls 39a are formed by lifting the part of the chassis 14 outward. This reduces defects such as a crack in the chassis 14.

The mounting parts 30 and 31 are provided in a pair at locations away from each other in the projecting direction of the holding portions 30b and 31b. The mounting holes 32 and 33 and the receiving portions 39 and 40 are provided in pairs at locations corresponding to the mounting parts 30 and 31. With this configuration, the lamp clip 18 is held to the chassis 14 at two positions away from each other in the projecting direction of the holding portions 30b and 31b. Therefore, the mounting condition is further stabilized and leakage of light is controlled with the receiving portions 39 and 40.

The support pin 29 projects from the main body 27 to the opposite direction to the mounting parts 30 and 31 in a location between the mounting parts 30 and 31. The contact part 43 is provided on the same side as the mounting parts 30 and 31 on the side to which the holding portions 30b and 31b project, with respect to the support pin 29. A worker can hold the support pin 29 that projects from the main body 27 in the opposite direction to the mounting parts 30 and 31, and mount the lamp clip 18 to the chassis 14. The contact part 43 is provided closely to the mounting part 30/31 that is located on the side to which the holding portions 30b and 31b project, that is, the side to which the lamp clip 18 is moved during mounting, out of the mounting parts 30 and 31. During mounting of the lamp clip 18, the contact part 43 moves ahead of the support pin 29 and guides the movement of the lamp clip 18. Therefore, the movement can be smoothly made.

The distal end of the holding portion 30b of the first mounting part 30 located on the side to which the holding portions 30b and 31b extend relative to the support pin 29 has the guide 36. The guide 36 is formed such that the distance to the main body 27 gradually increases as the distance to a tip of the distal end decreases. With the guide 36, the edge of the first mounting hole 32 is smoothly enters the gap between the holding portion 30b and the main body 27. Therefore, the lamp clip 18 is further smoothly moved during mounting with a guide by the guide 36 together with the contact part 43.

The holding portion 31b of the second mounting part 31 located on the opposite side to the side to which the holding portions 30b and 31b extend relative to the support pin 29 has the stopper 37 that projects toward the main body 27. The chassis 14 has the stopper hole 38 in the location away from the second mounting hole 33 for the second mounting part 31 having the stopper 37 in the direction in which the holding portion 31b extends. The stopper hole 37 is provided for holding the stopper 37. With this configuration the lamp clip 18 mounted to the chassis 14 is less likely to come off.

The second receiving portion 40 for the second mounting part 31 having the stopper 37 includes the sidewalls 40a and the bottom wall 40b. The sidewalls 40a rise outward from the chassis 14. The bottom wall 40b continues from the distal ends of the sidewalls 40a and tilts so as to open gradually outward toward the second mounting hole 33. When the second mounting part 31 having the stopper 37 is inserted in the second receiving portion 40 and the lamp clip 18 is moved, the stopper 37 goes over the edge of the second mounting hole 33. The holding portion 31b elastically deforms temporarily. Because the bottom wall 40b is tilted, the receiving portion 40 can receive the holding portion 31b that is elastically displaced. With this configuration, the lamp clip 18 is further smoothly moved during mounting.

The optical members 15a and 15b are arranged such that the cold cathode tubes 17 are sandwiched between the chassis 14 and the optical members 15a and 15b. The support pin 29 supports the optical members 15a and 15b. With this configuration, the optical members 15a and 15b are properly supported by the support pin 19.

The main body 27 has the wide portions 42 that are wider than the receiving portions 39 and 40 at the parts that overlap the receiving portions 39 and 40 in plan view. With the wide portions 42, the main body 27 is less likely to fall in the receiving portions 39 and 40. Therefore, the lamp clip 18 is stably mounted. In comparison to a main body having a wide portion in the entire part, the material cost of the main body 27 can be reduced.

The holding portions 30b and 31b have the cantilever shapes that extend from the base portions 30a and 31a, respectively, along the main body 27. With this configuration, the sufficient contact areas between the edges of the mounting holes 32 and 33 and the holding portions 30b and 31b can be achieved. Therefore, the mounting condition of the lamp clip 18 is further stabilized.

### <Second embodiment>

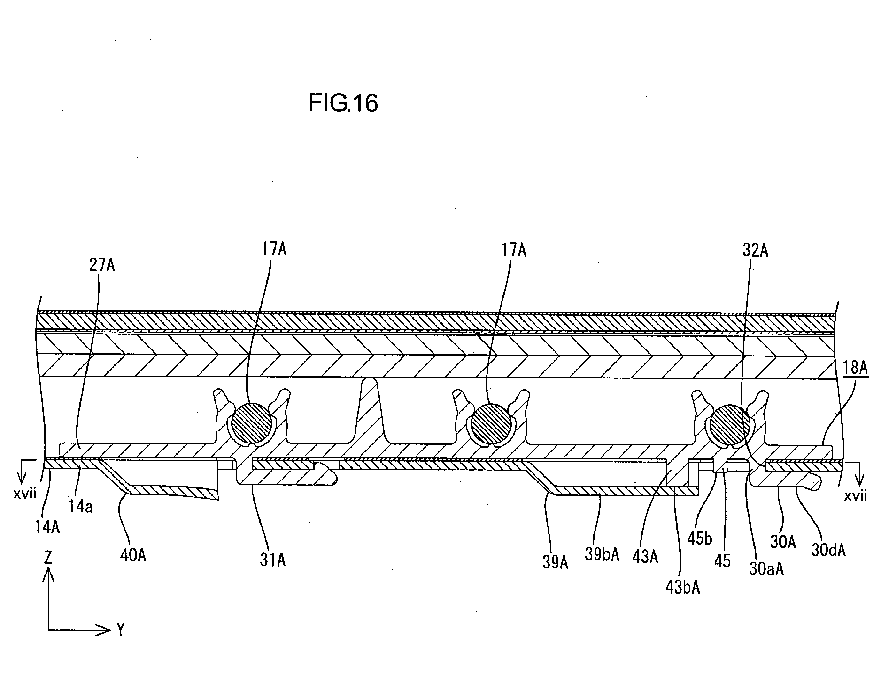

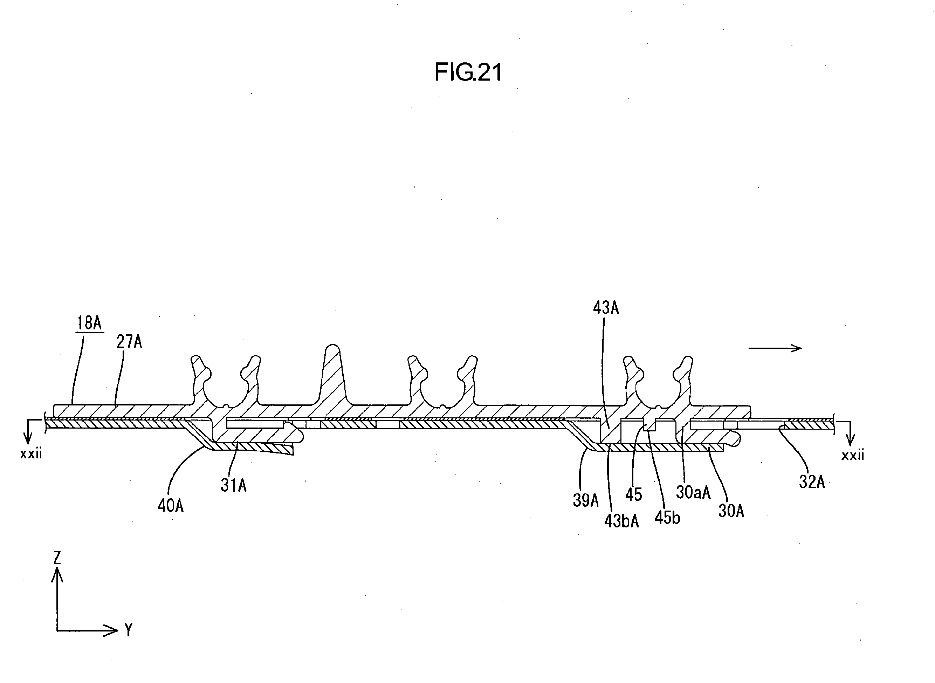

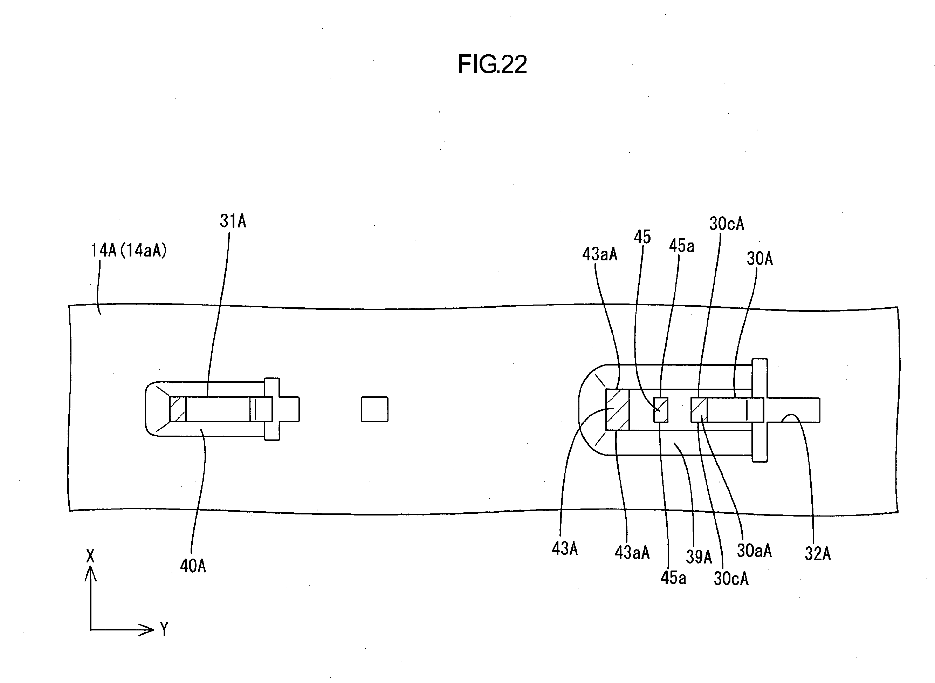

The second embodiment of the present invention will be explained with reference to FIGS. 16 to 22. In the second embodiment, second contact parts 45 are added. Similar parts to those in the first embodiment will be indicated by the same symbols followed by letter A. The same structures, functions and effects will not be explained.

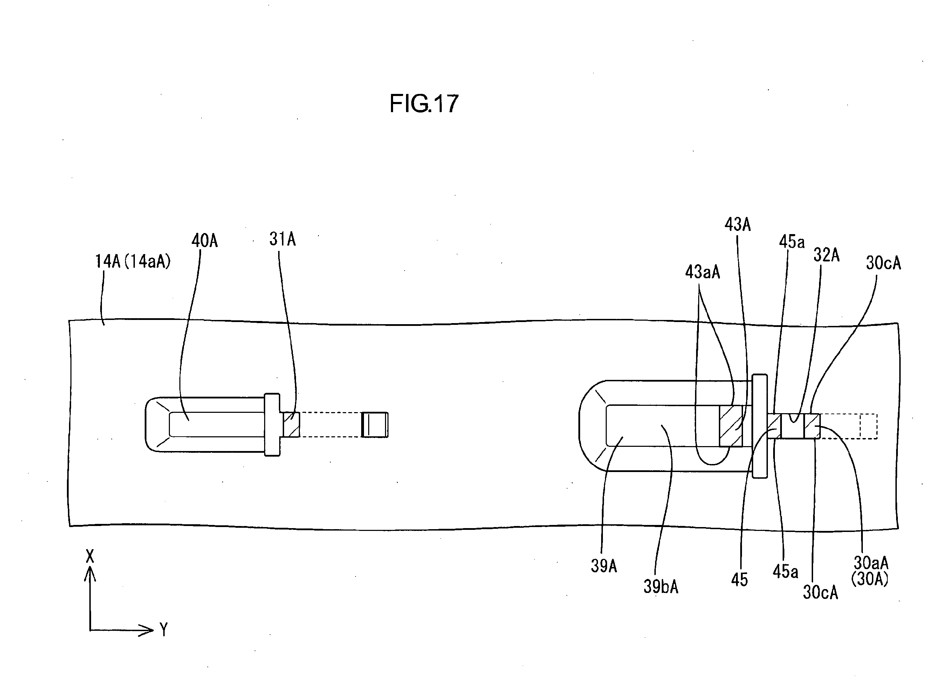

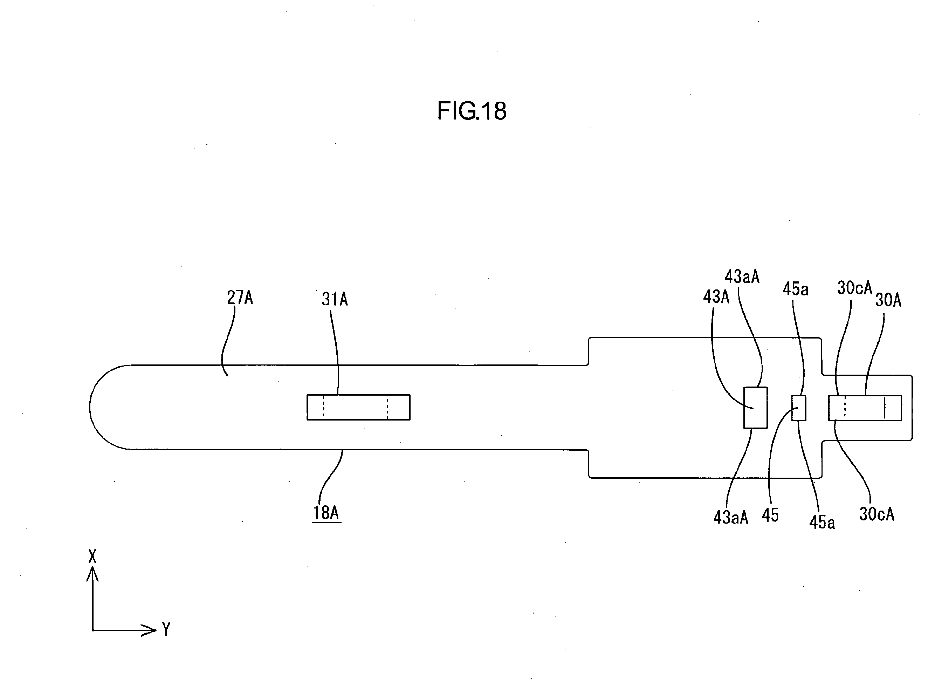

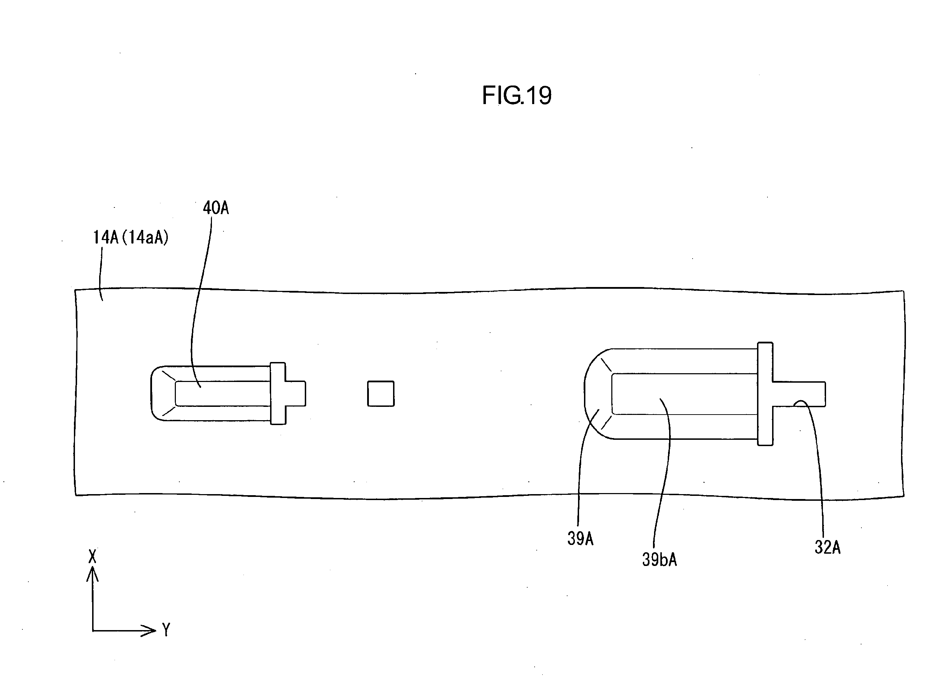

As illustrated in FIG. 16, a main body 27A of each lamp clip 18A has a second contact part 45 between a first mounting part 30A and a contact part 43A. The second contact part 45 is brought in contact with an inner wall of a first mounting hole 32A. The second contact part 45 is formed in a block-like shape. It projects from the rear surface of the main body 27A. It is located around the middle between the first mounting part 30A and the contact part 43A. As illustrated in FIGS. 17 and 18, the second contact part 45 has a width (measuring in the X-axis direction) substantially equal to that of the first mounting part 30A and that of the first mounting hole 32A. As illustrated in FIGS 17 and 19, the first mounting hole 32A has a length (measuring in the Y-axis direction) is substantially equal to a distance between the second contact part 45 and the base portion 30aA of the first mounting part 30A. When the lamp clip 18A is in the mounting position (i.e., it is mounted), side surfaces 30cA of the first mounting part 30A and the side surfaces 45a of the second contact part 45 are in contact with the inner walls of the first mounting hole 30A. As illustrated in FIG. 16, a projecting size of the second contact part 45 from the main body 27A is substantially equal to the thickness of a bottom plate 14aA of the chassis 14A. The distal-end surface 45b of the second contact part 45 and the rear surface of the bottom plate 14aA are substantially on the same plane when the lamp clip 18A is mounted.

As illustrated in FIG. 18, the contact part 43A has a width larger than those of the first mounting part 30A and the second contact part 45. As illustrated in FIG. 19, the bottom wall 39bA of the first receiving portion 39A has the width larger than that of the first mounting hole 32A and substantially equal to that of the contact part 43A. When the lamp clip 18A is in the hold position, the sidewalls 43aA and the distal-end surface 43bA of the contact part 43A and the distal-end surface 30dA of the first mounting part 30A are in contact with the inner surfaces of the first receiving portion 39A. The side surfaces 30cA of the first mounting part 30A and the side surfaces 35a and the distal-end surface 45b of the second contact part 45 are not in contact with the inner surfaces of the first receiving portion 39A.

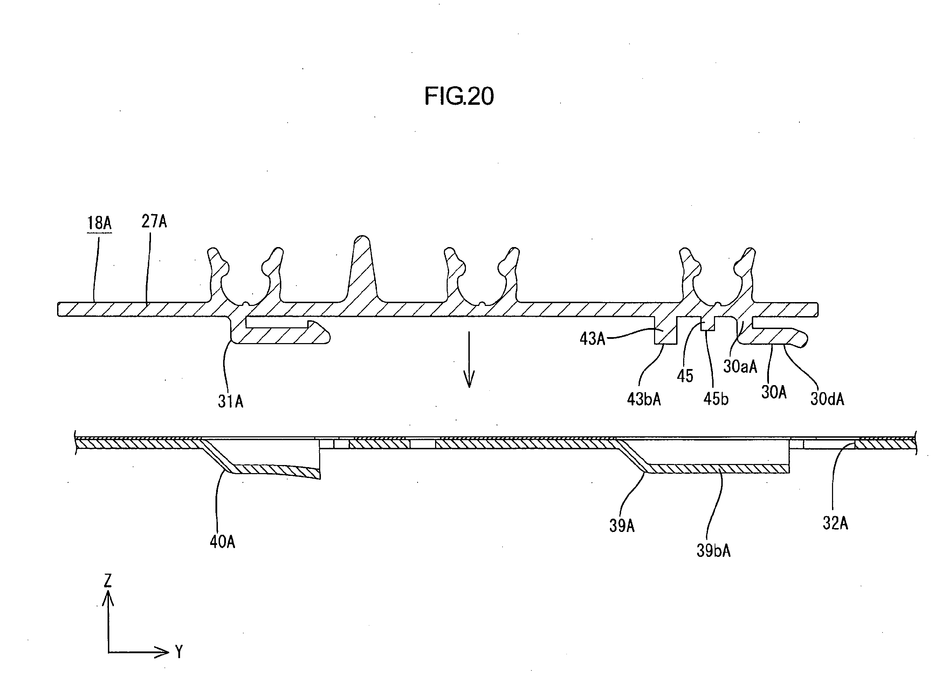

To mount the lamp clip 18A to the bottom plate 14aA of the chassis 14A, the lamp clip 18A is brought from the removed position illustrated in FIG. 20 closely to the bottom plate 14aA. The first mounting part 30A, the contact part 43A and the second contact part 45 are inserted in the first receiving portion 39A. The second mounting part 31A is inserted in the second receiving portion 40A. When the lamp clip 18A is pushed in the hold position, the distal-end surface 30dA of the first mounting part 30A and the side surfaces 43aA and the distal-end surface 43bA of the contact part 43A are brought in contact with the inner surface of the first receiving portion 39A. Moreover, the outer surface of the second mounting part 30A is brought in contact with the inner surface of the second receiving portion 40A. The movement of the lamp clip 18A to the mounting position is smoothly guided. When the lamp clip 18A is in the mounting position, the side surfaces 43aA and the distal-end surface 43bA of the contact part 43A is in contact with the inner surface of the first receiving portion 39A. The side surfaces 30cA of the first mounting part 30A and the side surfaces 45a of the second contact part 45 are in contact with the inner wall of the first mounting hole 30A. The contact points are three points that are away from each other in the Y-axis direction. The lamp clip 18A is further stably fixed in the mounted condition.

According to this embodiment, the second contact part 45 is provided on the main body 27A between the base portion 30aA of the first mounting part 30A and the contact part 43A. The second contact part 45 is in contact with the inner wall of the first mounting hole 32A. When the lamp clip 18A is mounted to the chassis 14A, the contact part 43A is in contact with the inner surface of the first receiving portion 39A and the second contact part 45 is in contact with the inner wall of the first mounting hole 32A. Supporting the lamp clip 18A with at least those two points can reduce backlash. Therefore, the lamp clips 18A and the cold cathode tubes 17A can be further stably mounted.

The second contact part 45 is formed such that the distal-end surface 45b and the outer surface of the chassis 14A are substantially on the same plane. An entire area of the second contact part 45 corresponding to the inner wall of the first mounting hole 32A in the projecting direction is in contact with the inner wall of the first mounting hole 32A with a minimum projecting dimension.

### <Third embodiment>

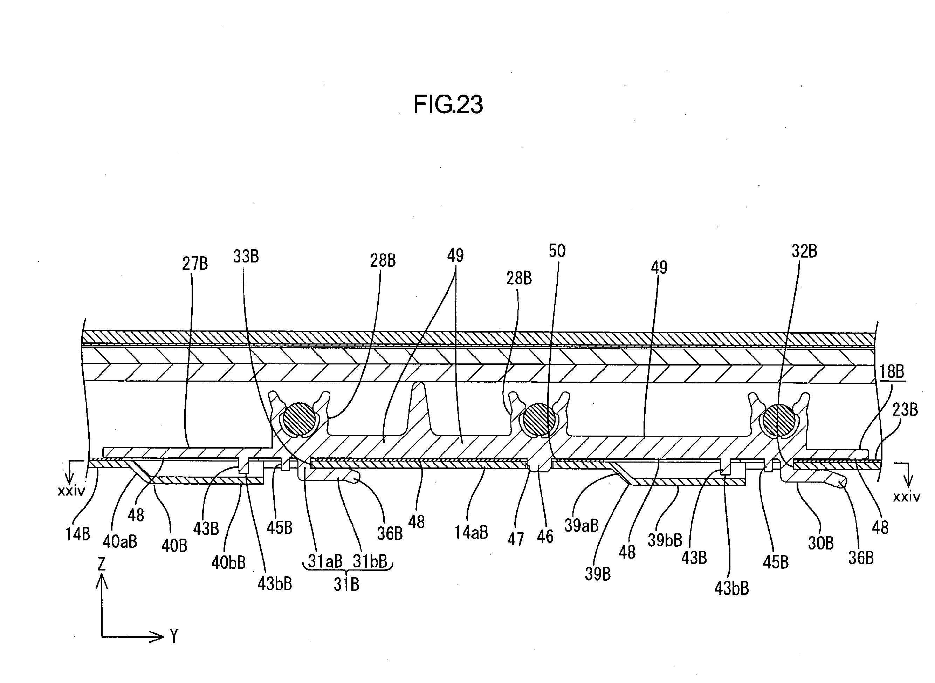

The third embodiment of the present invention will be explained with reference to FIGS. 23 to 28. In the third embodiment, the second mounting parts in the second embodiment will be altered to the second mounting parts 31B. Each lamp clip includes a contact part 43B, a second contact part 45B and a positioning structure. In the third embodiment, similar parts to those in the second embodiment will be indicated by the same symbols followed by letter B. The same structures, functions and effects will not be explained.

As illustrated in FIG. 23, each second mounting part 31B has a similar configuration as the first mounting part 30B. At an end of a holding portion 31bB of the second mounting part 31B, a guide 36B is provided. The guide 36B is formed such that a distance to the main body 27B gradually increases as a distance to a distal end thereof decreases. Projecting dimensions of the guides 36B are defined such that the projecting dimension of the guide 36B of the first mounting part 30B is larger than that of the guide 36B of the second mounting part 31B. A gap between a distal end of the guide 36B of the first mounting part 30B and the main body 27B, that is, an insertion opening for the edge of the first mounting hole 32B, is larger than a gap between a distal end of the guide 36B of the second mounting part 31B and the main body 27B, that is, an insertion opening for the edge of the second mounting hole 33B.

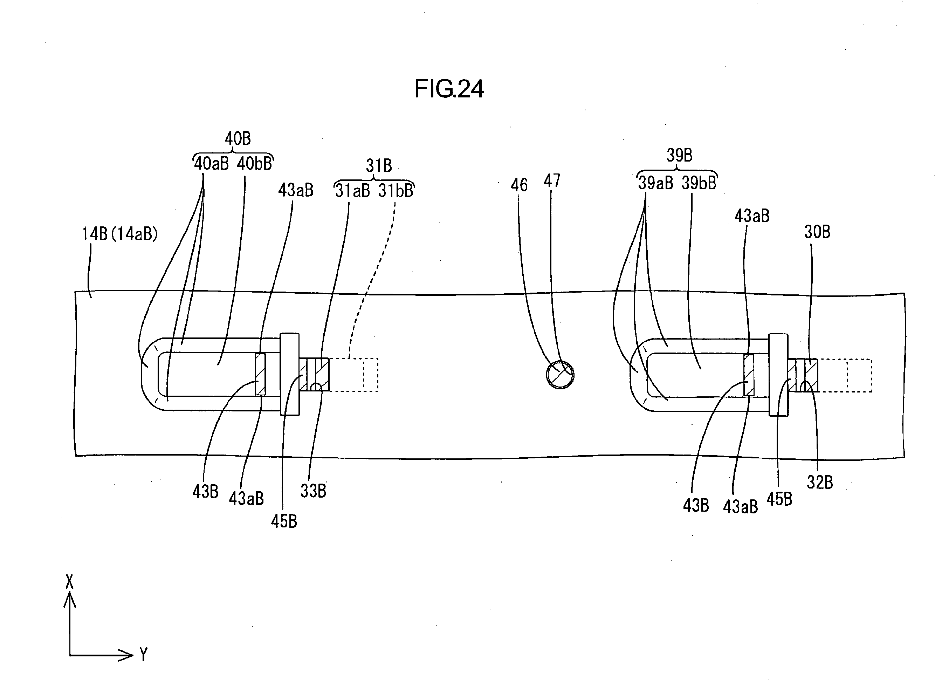

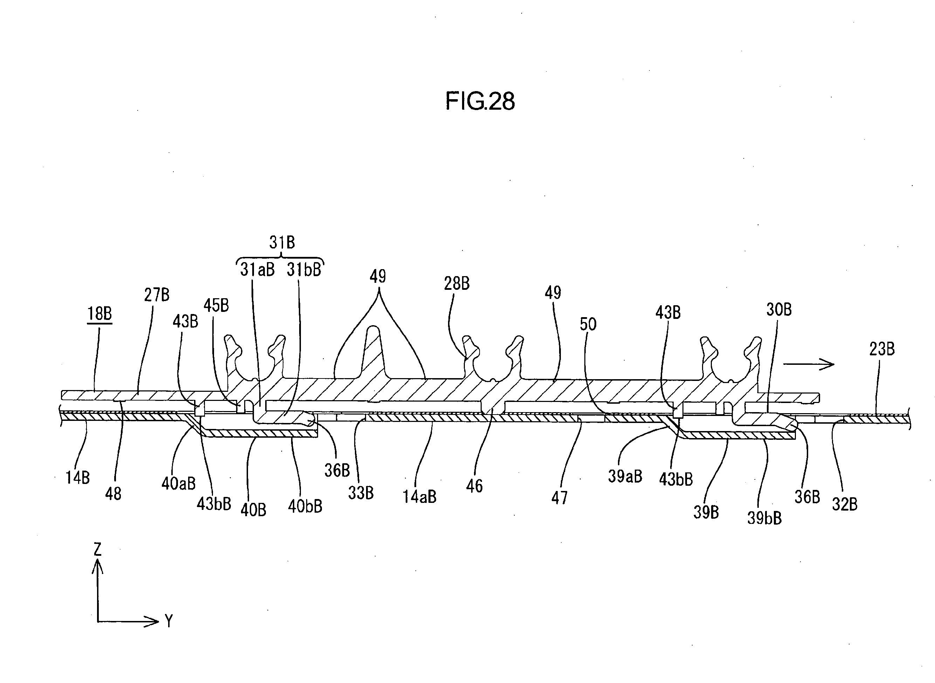

The second contact part 45B and the contact part 43B are arranged in sequence on the main body 27B on an opposite side to a side to which the holding portion 31bB extends from the base portion 31aB of the second mounting part 31B, similar to the first mounting part 30B. The contact part 43B and the second contact part 45B are inserted in the second receiving portion 40B together with the second mounting part 31B (in the hold position illustrated in FIG. 28) . The second contact part 45B is inserted in the second mounting hole 33B together with the base portion 31aB of the second mounting part 31B (in the mounting position illustrated in FIGS. 23 and 24) . The contact part 43B for the first receiving portion 39B and the contact part 43B for the second receiving portion 40B of this embodiment are formed in sizes such that the distal-end surfaces 43bB are not in contact with the bottom walls 39bB and 40bB of the respective receiving portions 39B and 40B. Moreover, they are formed in sizes such that the side surfaces 43aB are in contact with the sidewalls 39aB and 40aB of the receiving portions 39B and 40B.

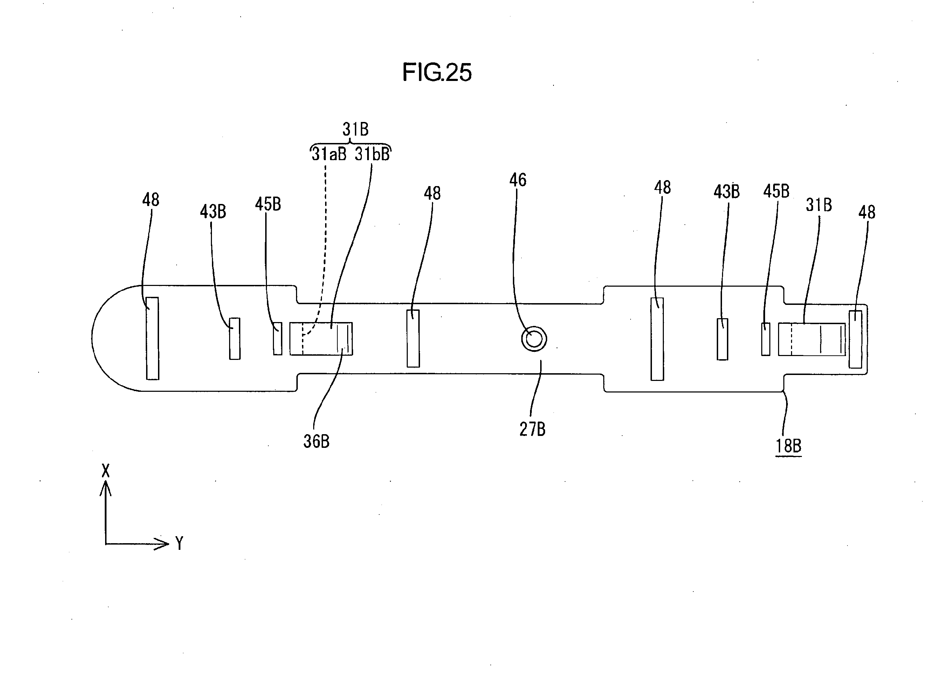

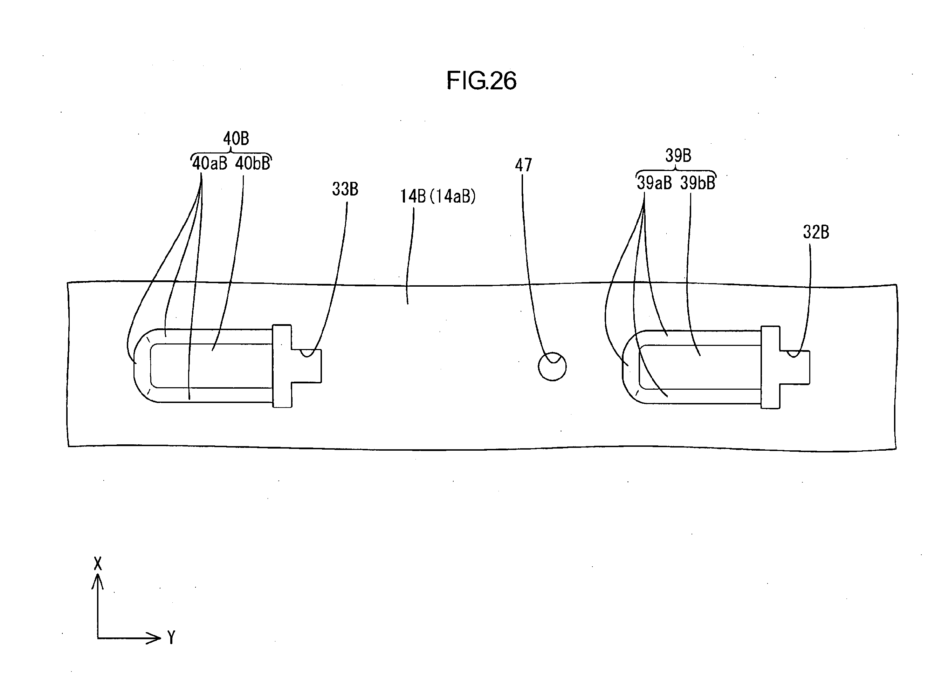

Each main body 27B and the bottom plate 14aB of the chassis 14B have the positioning structures. The main body 27B is positioned with respect to the bottom plate 14aB of the chassis 14B in the X-axis direction and the Y-axis direction, that is, relative to the plate surface (the bottom plate 14aB of the chassis 14B) when the positioning structures are engaged. Specifically, a positioning protrusion 46 protrudes from the rear surface of each main body 27B toward the rear-surface side and the bottom plate 14aB of the chassis 14B has positioning holes 47. Each positioning hole 47 is a through hole in which the positioning protrusion 46 is fitted. The positioning protrusion 46 is provided on the main body 27B between the contact part 43B for the first mounting part 30B and the second mounting part 31B with respect to the Y-axis direction. Specifically, the positioning protrusion 46 is provided directly below the center lamp holding part 28B. The projecting dimension of the positioning protrusion 46 is slightly larger than the thickness of the bottom plate 14aB of the chassis 14B. The positioning protrusion 46 has a circular shape in plan view (see FIG. 25). Each positioning hole 47 has a circular shape in plan view so as to receive the positioning protrusion 46. The diameter of the positioning hole 47 is defined such that a small clearance is provided when the positioning protrusion 46 is inserted (see FIGS. 24 and 26). The positioning protrusion 46 and the positioning hole 47 do not match, that is, they are in a non-engaging state when the lamp clip 18B is in the hold position relative to the chassis 14B (i.e., the mounting parts 30B and 31B are in the respective receiving portions 39B and 40B) . When the lamp clip 18B is in the mounting position relative to the chassis 14B (i.e., the mounting parts 30B and 31B are in the respective mounting holes 32B and 33B), the positioning protrusion 46 and the positioning hole 47 are match, that is, they are in an engaging state.

Four enforcement ribs 48 are provided at predetermined locations on the rear surface of the main body 27B (see FIG. 25) . Each enforcement rib 48 extends along the X-axis direction. Enforcement ribs 49 are provided on the front surface of the main body 27B (see FIG. 23). Each enforcement rib 49 extends along the Y-axis direction and continues into the corresponding lamp holding part 28B. The enforcement ribs 48 and 49 that are perpendicular to each other and provided on the front surface and the rear surface, respectively, increase the strength of the main body 27B. The reflection sheet 23 has positioning protrusion insertion holes 50 through which the positioning protrusions 46 are passed. The positioning protrusion insertion holes 50 are formed in locations corresponding to the positioning holes 47.

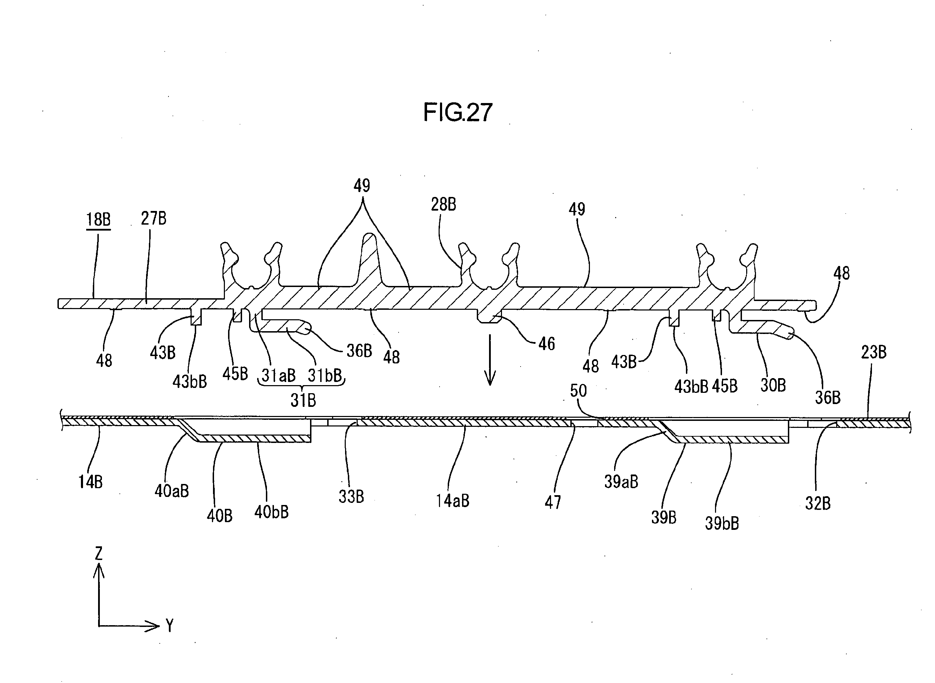

During mounting the lamp clip 18B to the bottom plate 14aB of the chassis 14B, the lamp clip 18B is brought closely to the bottom plate 14aB from the removed position illustrated in FIG. 27. Then, the first mounting part 30B, the contact part 43B and the second contact part 45B for the first mounting part 30B are inserted in the first receiving portion 39B. The second mounting part 31B and the contact part 43B and the second contact part 45B for the second mounting part 31B are inserted in the second receiving portion 40B. When the lamp clip 18B is pushed in to the hold position, the positioning protrusion 46 does not match the positioning hole 47 as illustrated in FIG. 28. The positioning protrusion 46 is in contact with the reflection sheet 23B (the bottom plate 14aB). Therefore, the main body 27B and the reflection sheet 23B are separated by a distance corresponding to the projecting dimension of the positioning protrusion 46 (i.e. , they are at different levels) . The gap between each mounting part 30B/31B and the corresponding holding portion 30bB/31bB is not aligned with the edge of the corresponding mounting hole 32B/33B. The holding portion 30bB/31bB and the edge of the mounting hole 32B/33B are aligned along the Y-axis direction so as to be opposite to each other. The mounting part 30B/31B has the guide 36B at the distal end and a sufficient gap is provided between the distal end of the guide 36B and the main body 27. When the lamp clip 18B is moved from the hold position to the mounting position, the holding portion 30bB/31bB are smoothly guided to the rear surface side of the edge of the mounting hole 32B/33B by the guide 36B. The holding portion 32B/33B is elastically deformed so as to open and separate from the main body 27B (to the rear-surface side).

When the lamp clip 18B is in the mounting position, the holding portion 30bB/31bB 31 returns to the original shape with resilience. The edge of the mounting hole 32B/33B is sandwiched between the holding portion 30bB/31bB and the main body 27B. The positioning protrusion 46 is fitted in the positioning hole 47. In the mounting position, the edge of the mounting hole 32B/33B is sandwiched between the main body 27B and the holding portion 30bB/31bB. Therefore, the lamp clip 18B is less likely to accidentally move in the Z-axis direction. Furthermore, the positioning protrusion 46 is fitted in the positioning hole 47. Therefore, the lamp clip 18B is less likely to accidentally move in the X-axis direction and the Y-axis direction. The lamp clip 18B is further stably fixed in the mounting position.

According to this embodiment, each main body 27B and the chassis 14B have the positioning structures that define a relative position of the main body 27B to the chassis 14B in a direction along the main body 17B when they are engaged. With these structures, the lamp clip 18B does not move in the direction along the main body 27 and remains at the relative position to the chassis 14B.

The positioning structures are the positioning protrusions 46 on the respective main bodies 27 and the positioning holes 47 formed in the chassis 14B and in which the respective positioning protrusions 46 are fitted. The lamp clips 18B are positioned relative to the chassis 14B when the positioning protrusions 46 on the main bodies 27B are fitted in the positioning holes 47 formed in the chassis 14B.

The positioning structures are not engaged when the mounting parts 30B and 31B are in the receiving portions 39B and 40B (the hold position). They are engaged when the mounting parts 30B and 31B are in the mounting holes 32B and 33B (the mounting position). When the mounting parts 30B and 31B are in the mounting holes 32B and 33B, the edges of the mounting holes 32B and 33B are sandwiched between the main body 27B and the respective holding portions 30bB and 31bB. Under this condition, the positioning structures are engaged. With this configuration, the lamp clips 18B mounted to the chassis 14B are stably held.

. The guides 36 are provided at the distal ends of the holding portions 30bB and 31bB of the mounting parts 30B and 31B. Each guide 36B is formed such that the distance to the main body 27B gradually decreases as the distance to the distal end decreases. When the mounting parts 30B and 31B are in the receiving portions 39B and 40B, respectively (the hold position), the positioning structures are not engaged. The main body 27B is separated from the chassis 14B. Because the guides 36B are provided at the distal ends of the holding portions 30bB and 31bB, the lamp clip 18B can be smoothly moved in the direction in which the holding portions 30bB and 31bB extend.

### <Other embodiments>

The present invention is not limited to the above embodiments explained in the above description. The following embodiments may be included in the technical scope of the present invention, for example.

(1) In the first and the second embodiments, the side surfaces and the distal-end surface of the contact part are in contact with the inner surface of the receiving portion. However, the contact part may have a smaller width than that of the contact part of the first embodiment or the second embodiment such that the side surfaces are not in contact with the inner surface of the receiving portion. The mounting parts may have such a structure. Each mounting part may be formed such that the distal-end surface is not in contact with the inner surface of the receiving portion.

(2) The distance between each mounting part and a corresponding contact part may be altered as necessary. For example, the distance may be defined equal to or smaller than the distance between the mounting hole and the receiving portion. With this configuration, the length of each receiving portion can be reduced. In the mounting position, the lamp clip is stably mounted with the contact part partially in contact with the receiving portion.

(3) In the second embodiment, the contact part and the second contact part are provided for each of the first mounting part and the second mounting part. However, only one of the contact parts may be provided, or one of the second contact parts may not be provided. The contact part and the second contact part for the first mounting part may not be provided and the contact part and the second contact part are provided only for the second mounting part.

(4) In the first and the second embodiments, the guide is provided at each first mounting part located on a side to which the lamp clip is moved for mounting with respect to the support pin. The stopper is provided at the second mounting part located on a side to which the lamp clip is moved for removal. However, the stopper may be provided at each first mounting part and the guide may be provided at each second mounting part. The stoppers may be provided at both mounting parts.

(5) In the above embodiments, each lamp clip includes two mounting parts. However, the lamp clip may include more than two mounting parts or only one mounting part. The lamp clip including more than two mounting parts may include more than two contact parts or second contact parts for the mounting parts.

(6) In the third embodiment, the chassis has the positioning holes in the bottom plate. The positioning holes are through holes provided as the positioning structures. However, the chassis may have positioning structures that are positioning recesses. Each positioning recess is formed by drawing a part of the bottom plate outward but not punched out.

(7) In the third embodiment, the positioning protrusions are provided on the main bodies and the positioning holes (or positioning recesses) are provided in the chassis as positioning structures. However, the positioning holes (the positioning recesses) may be provided in the main bodies and the positioning protrusions may be provided on the chassis.

(8) In the above embodiments, each lamp clip is slid in the Y-axis direction, that is, the direction perpendicular to the axial direction of the cold cathode tube. However, the lamp clip may be slid in the X-axis direction (the axis direction of the cold cathode tube). The holding portion of each mounting part may extend from the base portion in the X-axis direction.

(9) The relative positions between the mounting parts and the lamp holding parts or the support pin can be altered as necessary. The relative positions between the contact parts or the second contact parts and the lamp holding parts or the support pin may be altered as necessary.

(10) In the above embodiments, each holding portion is formed in a cantilever plate-like shape and elastically deformable. However, the holding portion may be a protrusion that is not elastically deformable.

(11) In the above embodiments, the sidewalls of each receiving portion are tilted. However, the sidewalls may rise substantially upright from the bottom plate of the chassis.

(12) The number and the locations of lamp holding parts can be altered as necessary. The number and the locations of the support pin can be altered as necessary.

(13) In the above embodiments, the contact parts that are in contact with the receiving portions are provided. However, the contact parts are not required. In that case, each receiving portion may be tapered such that the sidewalls are tilted. As a result, the mounting parts are easily inserted in the respective receiving portions. Namely, high workability can be provided.

(14) In the above embodiments, the cold cathode tubes are uses as light sources. However, other kinds of light sources including hot cathode tubes can be used.

(15) In the above embodiments, the chassis is made of metal plates. However, it may be made by resin molding.

(16) In the above embodiments, the TFTs are used as switching components of the liquid crystal display device. However, the technology described the above can be applied to liquid crystal display devices including switching components other than TFTs (e.g., thin film diode (TFD)). Moreover, the technology can be applied to not only color liquid crystal display devices but also black-and-white liquid crystal display devices.

(17) In the above embodiments, the liquid crystal display device including the liquid crystal panel as a display component is used. The technology can be applied to display devices including other types of display components.

(18) In the above embodiments, the television receiver including the tuner is used. However, the technology can be applied to a display device without the tuner.

## Claims

1. A lighting device comprising:
a chassis having a mounting hole;
a lamp arranged inside the chassis; and
a lamp holder mounted to the chassis through the mounting hole and holding the lamp, wherein:
the lamp holder includes a main body arranged inside the chassis and at least one mounting part, the mounting part including a base portion that projects from the main body and extends out of the chassis through the mounting hole and a holding portion that projects from the base portion and extends along the main body such that an edge of the mounting hole is sandwiched between the main body and the holding portion; and
the chassis includes at least one receiving portion for receiving the mounting part, the receiving portion being formed by drawing a part of the chassis outward, the part being adjacent to an edge of the mounting hole opposite to the edge sandwiched between the main body and the holding portion.

2. The lighting device according to claim 1, wherein the lamp holder further includes a contact part provided on the main body and an opposite side to the holding portion with respect to the base portion, and extends inside the receiving portion so as to be in contact with an inner surface of the receiving portion.

3. The lighting device according to claim 2, wherein the receiving portion and the contact portion are formed such that side surfaces of the contact part along a projecting direction in which the contact part extends are in contact with the inner surface of the receiving portion.

4. The lighting device according to claim 3, wherein the contact part has side surfaces along the projecting direction and the mounting part has side surfaces along a projecting direction in which the mounting part extends, the side surfaces being formed on substantially on same planes.

5. The lighting device according to any one of claims 2 to 4, wherein the receiving portion and the contact part are formed such that a distal-end surface of the contact part is in contact with the inner surface of the receiving portion.

6. The lighting device according to claim 5, wherein the receiving portion is formed such that a gap between the main body and the holding portion is aligned with the edge of the mounting hole with the distal-end surface of the contact part in contact with the receiving portion.

7. The lighting device according to any one of claims 5 and 6, wherein the distal-end surface of the contact part and a distal-end surface of the mounting part are substantially on the same plane.

8. The lighting device according to any one of claims 2 to 7, wherein the receiving portion is formed in a tapered overall shape that narrows toward a projecting end, the receiving portion including sidewalls and a bottom wall, the sidewalls rising from the chassis outward and tilt relative to the chassis, and the bottom wall continuing from distal ends of the sidewalls.

9. The lighting device according to claim 8, wherein the chassis has a slit that continues into the mounting hole in an area adjacent to the sidewalls and the mounting hole.

10. The lighting device according to claim 9, wherein the slit is wider than a dimension defined by bases of the sidewalls.

11. The lighting device according to any one of claims 2 to 10, wherein the lamp clip further includes a second contact part provided on the main body between the base portion and the contact part, the second contact part being in contact with an inner wall of the mounting hole.

12. The lighting device according to claim 11, wherein the second contact part is formed such that a distal-end surface and an outer surface of the chassis are substantially on a same plane.

13. The lighting device according to any one of claims 2 to 12, wherein:
the at least one mounting part includes a pair of mounting parts away from each other in the projecting direction in which the holding portion extends; and
the at least one receiving portion includes a pair of receiving portions at locations corresponding to the mounting parts.

14. The lighting device according to claim 13, wherein:
the lamp clip further includes a holding part provided on the main body between the mounting parts, the holding part projecting on a side opposite to a side on which the mounting part is located; and
the contact part is provided for the mounting part that is arranged on a side to which the holding portion extends with respect to the holding part.

15. The lighting device according to claim 14, wherein the holding portion located on the side to which the holding portion extends with respect to the holding part includes a guide at a distal end, the guide being formed such that a distance to the main body gradually increases as a distance to the distal end decreases.

16. The lighting device according to claim 15, wherein:
the holding portion located on a side opposite to the side to which the holding portion extends with respect to the holding part includes a stopper that projects toward the main body; and
the chassis has a stopper hole for holding the stopper, the stopper hole being formed in a location away from the mounting hole for the mounting part having the stopper in a direction in which the holding portion extends.

17. The lighting device according to claim 16, wherein the receiving portion for the mounting part having the stopper includes sidewalls that rise outward from the chassis and a bottom wall that continues from the distal ends of the sidewalls and tilts outward.

18. The lighting device according to any one of claims 14 to 17, further comprising an optical member arranged such that the lamp is located between the chassis and the optical member, wherein the holding part supports the optical member.

19. The lighting device according to any one of claims 1 to 18, wherein the main body and the chassis further include positioning structures that define a relative position of the main body to the chassis with respect to a direction along the main body.

20. The lighting device according to claim 19, wherein the positioning structures include a positioning protrusion provided on the main body and any one of a positioning recess and a positioning hole formed in the chassis and in which the positioning protrusion is fitted.

21. The lighting device according to any one of claims 19 and 20, wherein the positioning structures are in a non-engaging state in a condition that the mounting part is in the receiving portion and in an engaging state in a condition that the mounting part is in the mounting hole.

22. The lighting device according to claim 20, wherein the mounting part includes a guide at a distal end of the holding portion, the guide being formed such that a distance to the main body gradually increases as a distance to a tip of the distal end decreases.

23. The lighting device according to any one of claims 1 to 22, wherein the main body has a wide portion that is wider than the receiving portion in an overlapping area that overlaps the receiving portion in plan view.

24. The lighting device according to one of claims 1 to 23, wherein the holding portion has a cantilever plate-like shape that extends from the base portion along the main body.

25. A display device comprising:
the lighting device according to any one of claims 1 to 24; and
a display panel configured to provide display using light from the lighting device.

26. The display device according to claim 25, wherein the display panel is a liquid crystal panel including liquid crystals sealed between a pair of substrates.

27. A television receiver comprising the display device according to any one of claims 25 and 26.
